(19) Europäisches Patentamt
European Patent Office
Office européen des brevets

(11) Veröffentlichungsnummer : **0 467 826 A2**

# (12) EUROPÄISCHE PATENTANMELDUNG

(21) Anmeldenummer : **91810465.4**

(22) Anmeldetag : **18.06.91**

(51) Int. Cl.[5] : **C08G 85/00,** C08G 65/40, C08G 59/06, C08G 75/00

(30) Priorität : **26.06.90 CH 2127/90**

(43) Veröffentlichungstag der Anmeldung : **22.01.92 Patentblatt 92/04**

(84) Benannte Vertragsstaaten : **DE ES FR GB IT NL SE**

(71) Anmelder : **CIBA-GEIGY AG**
**Klybeckstrasse 141**
**CH-4002 Basel (CH)**

(72) Erfinder : **Pfaendner, Rudolf, Dr.**
**Sackgasse 3**
**W-6149 Rimbach/Odenwald 1 (DE)**
Erfinder : **Kainmüller, Thomas, Dr.**
**Am Kümmelberg 1**
**W-6145 Lindenfels 1 (DE)**
Erfinder : **Hoffmann, Kurt, Dr.**
**Heidenbergstrasse 15**
**W-6147 Lautertal 2 (DE)**
Erfinder : **Wolf, Jean-Pierre, Dr.**
**257, chemin de la motta**
**CH-1791 Courtaman (CH)**
Erfinder : **Kramer, Andreas, Dr.**
**Bundtels**
**CH-3186 Düdingen (CH)**
Erfinder : **Stockinger, Friedrich**
**Au Fernotz**
**CH-1784 Courtepin (CH)**

## (54) Lineare Polymere.

(57) Im wesentlichen lineare Polymere enthaltend mindestens einen die Löslichkeit des Polymeren in organischen Lösungsmitteln erhöhenden Anteil an Struktureinheiten der Formel Ia oder Ib

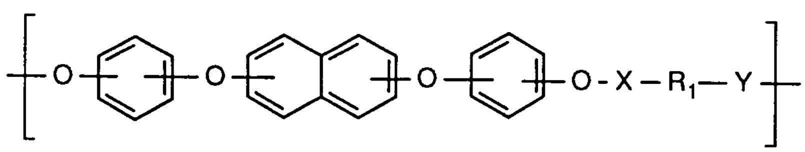
(Ia),

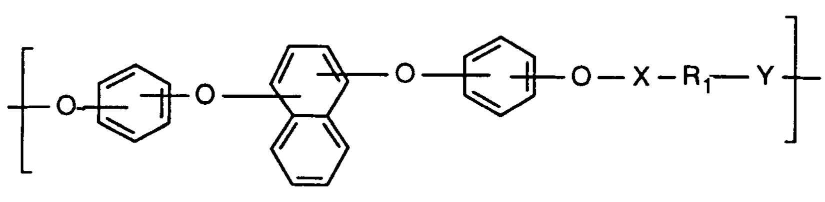
(Ib),

worin die aromatischen Ringe unsubstituiert oder durch ein oder mehrere ($C_1$-$C_4$)-Alkylgruppen, ($C_1$-$C_4$)-Alkoxygruppen, Phenylgruppen oder Halogenatome substituiert sind,
X für eine direkte Bindung, $-SO_2-$, -CO-, -CO-O-, -CO-NH- oder

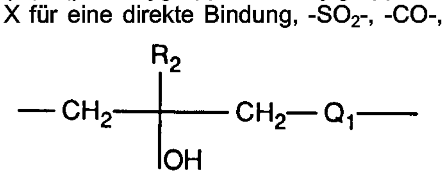

und Y für eine direkte Bindung, $-SO_2-$, -CO-, -O-CO-, -NH-CO- oder

EP 0 467 826 A2

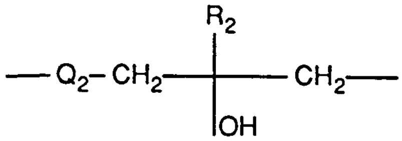

steht, worin $R_2$ ein H-Atom oder Methyl, $Q_1$ -O-, -$NR_2$-, -S- oder -OCO- und $Q_2$ -O-, -$NR_2$-, -S- oder -COO- bedeutet,
$R_1$ einen zweiwertigen aliphatischen, cycloaliphatischen, aromatischen oder araliphatischen Rest mit bis zu 30 C-Atomen bedeutet, der unsubstituiert ist oder durch ein oder mehrere ($C_1$-$C_4$)-Alkyle, ($C_1$-$C_4$)-Alkylthio, ($C_2$-$C_6$)-Alkenyle, ($C_5$-$C_{12}$)-Cycloalkyle, ($C_6$-$C_{12}$)-Aryle oder eine oder mehrere Cyano- oder Nitrogruppen substituiert ist und in dem ein oder mehrere Kohlenstoffatome durch Sauerstoff-, Schwefel- und/oder Stickstoffatome ersetzt sein können, oder $R_1$, falls X und/oder Y eine direkte Bindung ist, auch -CO- darstellt,
können vorteilhaft aus der Lösung heraus verarbeitet werden und eignen sich zum Modifizieren von Matrixharzen.

Die vorliegende Erfindung betrifft im wesentlichen lineare Polymere auf der Basis von Bis-(hydroxyphenoxy)naphthalinen, ein Verfahren zu deren Herstellung, ein Verfahren zur Herstellung von Bis-(hydroxyphenoxy)naphthalinen, die aus den erfindungsgemässen Polymeren hergestellten Formstoffe, Beschichtungen oder Folien sowie die Verwendung der erfindungsgemässen Polymeren zum Modifizieren von Matrixharzen.

Polymere, insbesonder thermoplastische Polymere, mit überwiegend aromatischen Gruppen sind häufig in herkömmlichen organischen Lösungsmitteln, wie chlorierten Kohlenwasserstoffen, schwer oder nicht löslich. Für viele Anwendungen, beispielsweise beim Modifizieren von (duromeren) Matrixharzen, besteht das Bedürfnis, Polymere dieser Art aus einer Lösung heraus zu verarbeiten.
In der US-PS 3,875,103 wird erwähnt, dass Polyethersulfone in chlorierten Kohlenwasserstoffen instabile Lösungen bilden und deshalb ein spezielles Lösungsmittelgemisch (Cyclohexanon/DMSO) eingesetzt wird. Ebenso erfüllen Polyethersulfone mit Naphthalingruppen, die aus J.Pol.Sci., Pol.Chem.Ed. 21, 2283 (1983) sowie aus den JP-Kokai's 275,326/86 und 39,632/87 bekannt sind, nicht alle Anforderungen in Bezug auf die Löslichkeit.

Es wurde nun gefunden, dass Polymere mit Arylenethereinheiten aus Bis-(hydroxyphenoxy)naphthalinen in gebräuchlichen organischen Lösungsmitteln, vorzugsweise in halogenierten Kohlenwasserstoffen, gut löslich sind und stabile Lösungen bilden.

Gegenstand der vorliegenden Erfindung sind somit im wesentlichen lineare Polymere mit einer reduzierten Viskosität von 0,1 bis 2,5 dl/g, gemessen an einer Lösung von 1 g Polymeren in 100 ml N-Methylpyrrolidon (NMP) bei 25°C, enthaltend mindestens einen die Löslichkeit des Polymeren in organischen Lösungsmitteln erhöhenden Anteil an Struktureinheiten der Formel Ia oder Ib

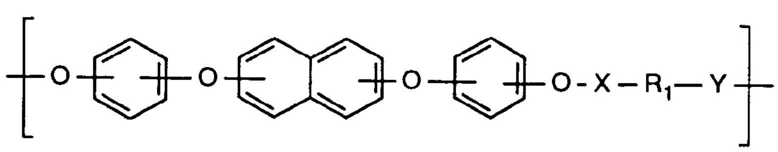
(Ia),

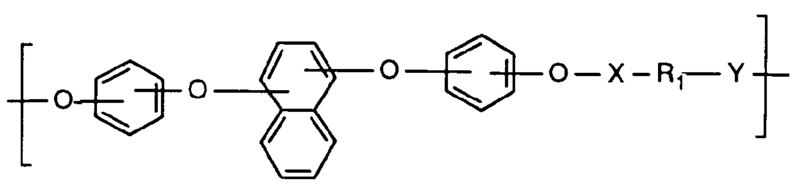
(Ib),

worin die aromatischen Ringe unsubstituiert oder durch ein oder mehrere ($C_1$-$C_4$)-Alkylgruppen, ($C_1$-$C_4$)-Alkoxygruppen, Phenylgruppen oder Halogenatome substituiert sind,
X für eine direkte Bindung, $-SO_2-$, -CO-, -CO-O-, -CO-NH- oder

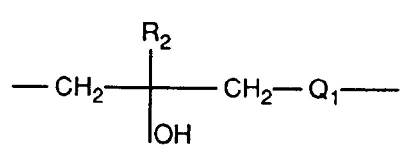

steht, worin $R_2$ ein H-Atom oder Methyl und $Q_1$ -O-, $-NR_2-$, -S- oder -OCO- bedeutet,
Y für eine direkte Bindung, $-SO_2-$, -CO-, -O-CO-, -NH-CO- oder

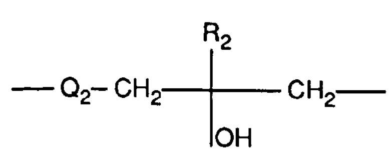

steht, worin $R_2$ ein H-Atom oder Methyl und $Q_2$ -O-, $-NR_2-$, -S- oder -COO- bedeutet,
$R_1$ einen zweiwertigen aliphatischen, cycloaliphatischen, aromatischen oder araliphatischen Rest mit bis zu 30 C-Atomen bedeutet, der unsubstituiert ist oder durch ein oder mehrere ($C_1$-$C_4$)-Alkyle, ($C_1$-$C_4$)-Alkylthio, ($C_2$-

$C_6$)-Alkenyle, ($C_5$-$C_{12}$)-Cycloalkyle, ($C_6$-$C_{12}$)-Aryle oder eine oder mehrere Cyano- oder Nitrogruppen substituiert ist und in dem ein oder mehrere Kohlenstoffatome durch Sauerstoff-, Schwefel- und/oder Stickstoffatome ersetzt sein können,
oder $R_1$, falls X und/oder Y eine direkte Bindung ist, auch -CO- darstellt.

Der Begriff "im wesentlichen linear" ist so zu verstehen, dass die erfindungsgemässen Polymeren entweder lineare Ketten ausbilden oder nur einen geringen Verzweigungsgrad aufweisen, so dass sie sich ohne Schwierigkeit in einem herkömmlichen organischen Lösungsmittel, beispielsweise in einem chlorierten Kohlenwasserstoff oder in einem polaren aprotischen Lösungsmittel, lösen lassen.

Die Löslichkeit wird im allgemeinen von der Konzentration der Struktureinheiten der Formel Ia oder Ib beeinflusst werden. Dabei wird die Löslichkeit mit zunehmender Konzentration dieser Struktureinheiten in der Regel zunehmen. Unter "einem die Löslichkeit des Polymeren erhöhenden Anteil an Struktureinheiten der Formel Ia oder Ib" ist im Falle von Copolymeren im Rahmen dieser Beschreibung zumindest ein solcher Anteil zu verstehen, der im Vergleich zu nicht mit solchen Struktureinheiten modifizierten Polymeren (Basispolymer) entweder überhaupt erst zu einer Löslichkeit in einem bestimmten Lösungsmittel führt, die Löslichkeit in einem bestimmten Lösungsmittel merklich erhöht oder der zu einer merklichen Erhöhung der Lagerstabilität einer Lösung führt. Uebliche Werte für die Konzentration einer Polymerlösung bewegen sich im Bereich von 1-75 Gew.%, insbesondere von 5-50 Gew.% des Polymeren, bezogen auf die Lösung.

Die für ein bestimmtes Polymer zum Erzielen einer gewünschten Löslichkeit in einem vorgegebenen Lösungsmittel benötigte Menge an Struktureinheiten der Formel Ia oder Ib kann mittels Routineversuchen ermittelt werden. In der Regel enthalten die erfindungsgemässen Polymeren 5 mol-% oder mehr, vorzugsweise mehr als 10 mol-%, und insbesondere mehr als 20 mol-% dieser Struktureinheiten, bezogen auf das Polymere.

Unter dem Begriff "Polymer" sind im Rahmen dieser Beschreibung auch Oligomere zu verstehen. Die reduzierte Viskosität der erfindungsgemässen Polymeren erstreckt sich über einen Bereich von etwa 0,1 bis etwa 2,5 dl/g. Dies entspricht einem Molekulargewichtsbereich von etwa 1'000 bis etwa 150'000 (Zahlenmittel). Bevorzugt werden Polymere mit einem Zahlenmittel des Molekulargewichts von 5'000 bis 50'000. Im Falle der Diglycidylether auf Basis der erfindungsgemässen Bis-(hydroxyphenoxy)naphthaline können die Oligomeren auch Molekulargewichte wesentlich unterhalb von 1'000 aufweisen.

Der Rest $R_1$ bedeutet vorzugsweise einen unsubstituierten oder substituierten cycloaliphatischen oder aromatischen Rest, insbesondere einen aromatischen Rest.

Enthalten die aromatischen Ringe in der Struktureinheit der Formel Ia oder Ib oder der Rest $R_1$ in Formel Ia oder Ib Alkylsubstituenten, so können diese Methyl, Ethyl, n-Propyl, Isopropyl, n-Butyl, sek.-Butyl oder tert.-Butyl sein.

Beispiele für Alkoxyreste sind Methoxy, Ethoxy, n-Propoxy, Isopropoxy, n-Butoxy und tert.-Butoxy.

Bedeuten irgendwelche Reste Halogenatome, so handelt es sich hierbei im allgemeinen um Chlor, Brom, Fluor oder Jod, vorzugsweise um Chlor oder Brom.

Beispiele für Alkylthioreste sind Methylthio, Ethylthio, n-Propylthio, Isopropylthio oder n-Butylthio.

Bedeuten irgendwelche Reste Alkenyl, so handelt es sich dabei um verzweigte oder insbesondere um geradkettige Reste. Alkenylreste weisen zwei bis sechs Kohlenstoffatome auf. Beispiele für Alkenylreste sind Vinyl, Prop-1-enyl, Prop-2-enyl, n-But-3-enyl, n-Pent-4-enyl oder n-Hex-5-enyl. Bevorzugt werden geradkettige Alkenylreste mit zwei oder drei Kohlenstoffatomen, insbesondere Vinyl, Prop-1-enyl oder Prop-2-enyl (Allyl). Alkenylsubstituenten werden besonders bevorzugt, da sie eine Vernetzung der erfindungsgemässen Polymeren über die Alkenylgruppen gestatten.

Bedeuten irgendwelche Reste Cycloalkyl, so handelt es sich dabei im allgemeinen um Gruppen mit fünf bis acht Ringkohlenstoffatomen. Bevorzugt wird Cyclohexyl. Beispiele für Cycloalkylreste sind Cyclopentyl, Cyclohexyl, Cycloheptyl oder Cyclooctyl.

Beispiele für Arylreste sind Phenyl, Naphthyl und Biphenyl, vorzugsweise handelt es sich hierbei um Phenyl.

Im Rest $R_1$ können auch ein oder mehrere, vorzugsweise ein, zwei oder drei Kohlenstoffatome durch Sauerstoff-, Schwefel- und/oder Stickstoffatome ersetzt sein. Beispiele für derartig modifizierte Alkylenketten sind Reste, die sich von Polyalkylenglykolen ableiten. Ferner kann es sich um aromatische oder nicht aromatische heterocyclische Systeme handeln, die vorzugsweise fünf- oder sechsgliedrig sind. Im Falle von heterocyclischen Systemen sind vorzugsweise ein bis drei Ringkohlenstoffatome durch Stickstoffatome oder ein oder zwei Ringkohlenstoffatome durch Sauerstoff- oder Schwefelatome ersetzt. Es können auch unterschiedliche Heteroatome in einem Ring auftreten, beispielsweise ein Stickstoff- und ein Sauerstoffatom.

Beispiele für heterocyclische Reste sind Morpholindiyl, Piperidindiyl, Furandiyl, Pyridindiyl, Thiophendiyl, Triazindiyl und Pyridazindiyl.

Die Definition "ein oder mehrere Kohlenstoffatome sind durch Sauerstoff-, Schwefel- und/oder Stickstoffatome ersetzt" umfasst auch solche heterocyclischen Systeme, bei denen die Ringheteroatome neben der Einbindung in das Ringsystem noch ihrerseits zusätzliche Atome oder Substituenten tragen. Beispiele für solche Heterogruppen sind $-SO_2-$, -NH- oder -NO-.

Die Reste X und Y in den Struktureinheiten der Formel I können im Rahmen der gegebenen Definitionen gleiche oder unterschiedliche Bedeutungen aufweisen. Vorzugsweise haben diese Reste die gleiche Bedeutung, und insbesondere stehen X und Y für eine direkte Bindung.

Bevorzugt sind Polymere enthaltend Struktureinheiten der Formeln Ia oder Ib, worin X für eine direkte Bindung, $-SO_2-$, -CO-O-, -CO-NH- oder

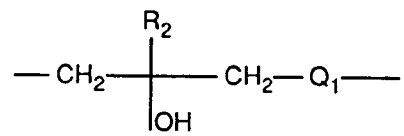

steht, worin $R_2$ ein H-Atom oder Methyl und $Q_1$ -O-, $-NR_2-$ oder -S- bedeutet, Y für eine direkte Bindung, $-SO_2-$, -O-CO-, -NH-CO- oder

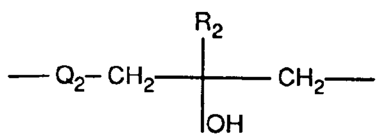

steht, worin $R_2$ ein H-Atom oder Methyl und $Q_2$ -O-, $-NR_2-$ oder -S- bedeutet.

Der Rest $R_1$ steht vorzugsweise für einen aromatischen Rest.

Besonders bevorzugt sind Polymere, worin die aromatischen Gruppen unsubstituiert sind.

Die erfindungsgemässen Polymeren weisen entweder gleiche oder unterschiedliche wiederkehrende Struktureinheiten auf oder es handelt sich um Copolymere, vorzugsweise solche, die neben der wiederkehrenden Struktureinheit der Formel Ia oder Ib noch wiederkehrende Struktureinheiten der Formel II

$$\left[ O - R_3 - O - X - R_1 - Y \right] \quad (II),$$

aufweisen, worin X, $R_1$ und Y die gleiche Bedeutung wie in Formel Ia oder Ib haben und $R_3$ einen zweiwertigen aliphatischen, cycloaliphatischen, araliphatischen oder aromatischen Rest mit bis zu 50 C-Atomen bedeutet, mit der Massgabe, dass der Rest der Formel II vom Rest der Formel Ia oder Ib verschieden ist.

Die bevorzugten erfindungsgemässen Polymeren enthalten, bezogen auf die Gesamtmenge der im Polymer vorhandenen Struktureinheiten, 5 bis 100 mol-%, insbesondere 10 bis 100 mol-%, einer wiederkehrenden Struktureinheit der Formel Ia oder Ib und 95 bis 0 mol-%, insbesondere 90 bis 0 mol-%, einer wiederkehrenden Struktureinheit der Formel II.

Vorzugsweise stellt $R_3$ einen unsubstituierten oder durch ein oder mehrere $(C_1-C_4)$-Alkyle, $(C_1-C_4)$-Alkoxy, Phenyle oder Halogenatome substituierten Rest der Formeln IIIa bis IIIi dar,

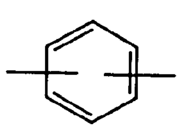 (IIIa), 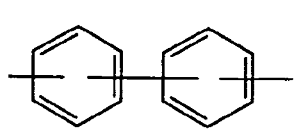 (IIIb), 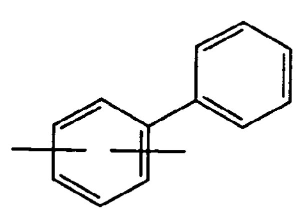 (IIIc),

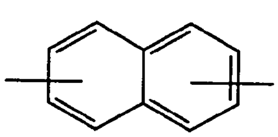 (IIId), 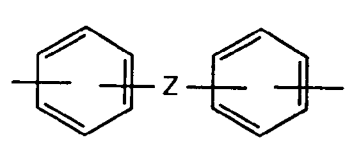 (IIIe),

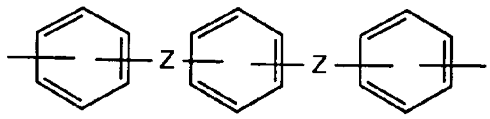 (IIIf),

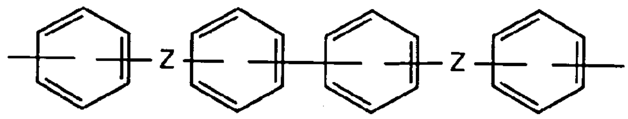 (IIIg),

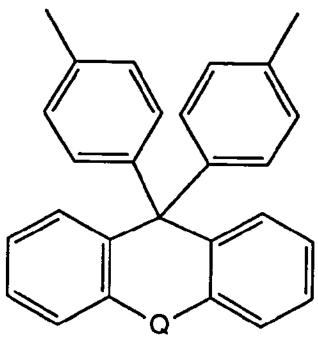 (IIIh), 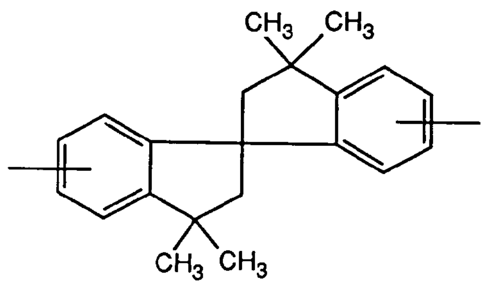 (IIIi),

wobei Z $-CH_2-$, $-C(CH_3)_2-$, $-C(CH_3)(C_6H_5)-$, $-C(CF_3)_2-$, -S-, -SO-, $-SO_2$,

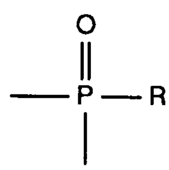 ,

worin R Methyl oder Phenyl ist, -O-, oder -CO- bedeutet und Q für eine direkte Bindung, $-CH_2-$, -O- oder -CO- steht.

Insbesondere bedeutet $R_3$ einen Rest der Formeln

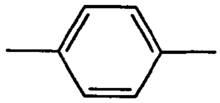 , 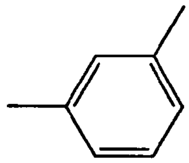 , 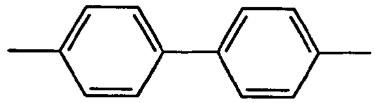 ,

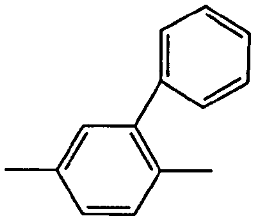 , 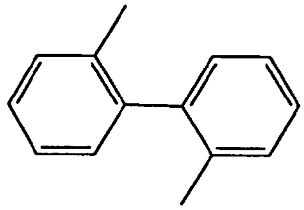 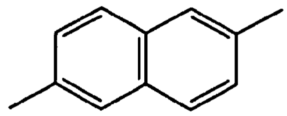 ,

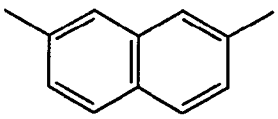 , 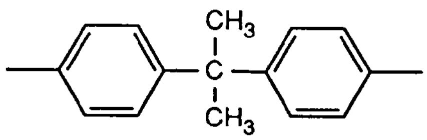 ,

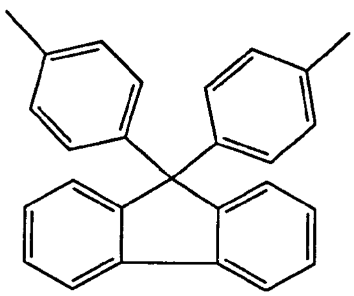 , 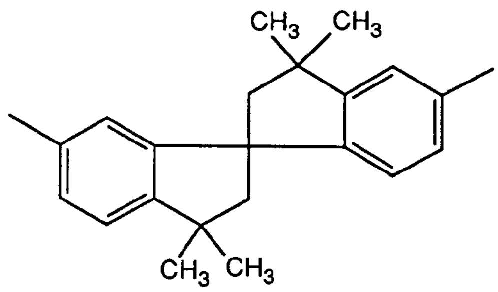 ,

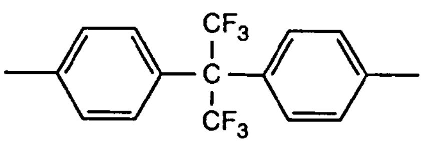 , 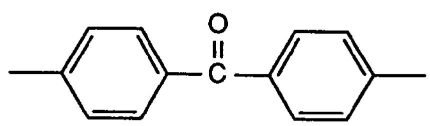 oder

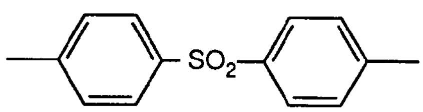 ,

und ganz besonders steht $R_3$ für

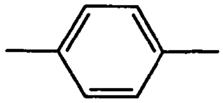 , 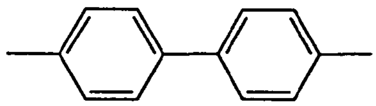 , 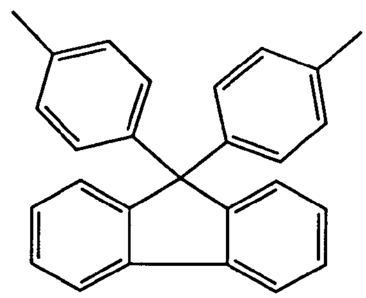 ,

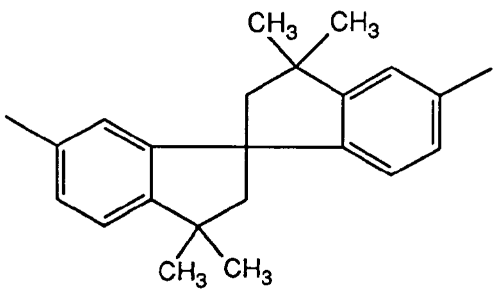 , 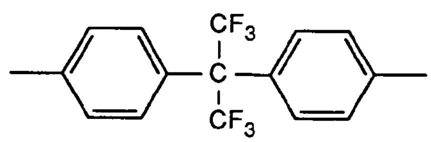 ,

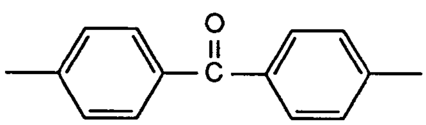 oder 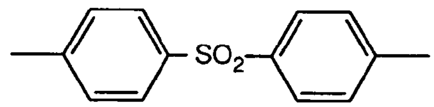 .

Beispiele für erfindungsgemässe Polymere sind Polyarylenether, wie Polyarylenetherketone und Polyarylenethersulfone, Polysulfonate, Polycarbonate, Polyester, Polyurethane und Phenoxyharze, wobei diese noch mit anderen Monomeren, die sich mit den betreffenden Monomeren der Polymeren cokondensieren lassen, modifiziert werden können. Ausserdem können die Endgruppen der erfindungsgemässen Polymeren, wie beispielsweise die Hydroxyl- oder Carboxylgruppen in bekannter Weise weiter umgesetzt werden, beispielsweise mit Epichlorhydrin oder β-Methylepichlorhydrin, wobei nach der Dehydrochlorierung die entsprechenden Diglycidylverbindungen erhalten werden. Desgleichen lassen sich die erfindungsgemässen Polymeren mit Diaminen oder Dianhydriden umsetzen.

Besonders bevorzugte Polymere dieser Erfindung sind überwiegend aus aromatischen Gruppen aufgebaut. Davon sind besonders die Polyether und davon die Polyetherketone und Polyethersulfone bevorzugt. Erfindungsgemässe Polymere mit aromatischen Gruppen zeichnen sich in der Regel durch besonders gute thermische Eigenschaften aus. Dabei handelt es sich bevorzugt um Verbindungen, die zu 10 bis 100 mol% aus wiederkehrenden Struktureinheiten der Formel Ia oder Ib bestehen.

Ganz besonders bevorzugte Polymere dieser Erfindung sind Polyarylenether, insbesondere solche, die, bezogen auf die Gesamtmenge der im Polyarylenetherharz vorhandenen Struktureinheiten, 5-100 mol-% einer wiederkehrenden Struktureinheit der Formel IVa oder IVb

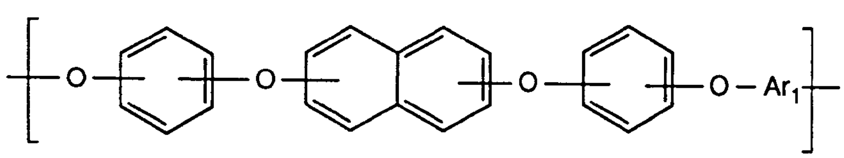 (IVa ),

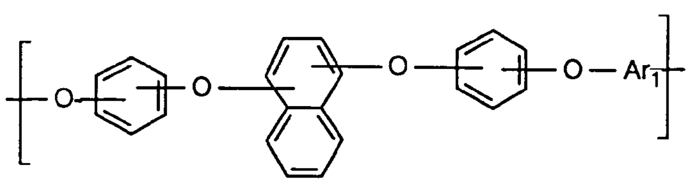 (IVb),

worin die aromatischen Ringe unsubstituiert oder durch eine oder mehrere ($C_1$-$C_4$)-Alkylgruppen, ($C_1$-$C_4$)-Alkoxygruppen, Phenylgruppen oder Halogenatome substituiert sind, und 95-0 mol-% einer wiederkehrenden

Strukturеinheit der Formel V

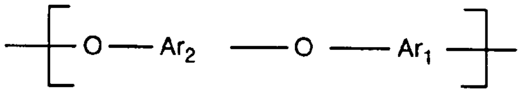 (V),

enthalten, worin $Ar_1$ eine unsubstituierte oder durch eine oder mehrere $(C_1$-$C_4)$-Alkylgruppen, $(C_1$-$C_4)$-Alkoxygruppen, Phenylgruppen oder Halogenatome substituierte Gruppe der Formeln VIa bis VIe darstellt,

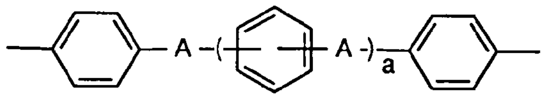 (VIa),

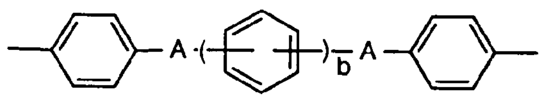 (VIb),

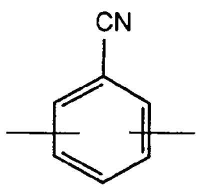 (VIc), 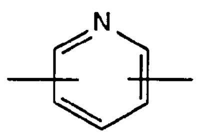 (VId), 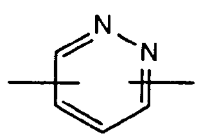 (VIe),

wobei A -CO-, $-SO_2$, oder -SO- bedeutet, a die Zahl 0 oder 1 und b die Zahl 2 oder 3 bedeutet, worin $Ar_2$ eine unsubstituierte oder durch eine oder mehrere $(C_1$-$C_4)$-Alkylgruppen, $(C_1$-$C_4)$-Alkoxygruppen, Phenylgruppen oder Halogenatome substituierte Gruppe der Formeln IIIa bis IIIi darstellt,

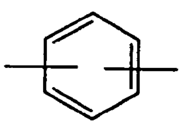 (IIIa), 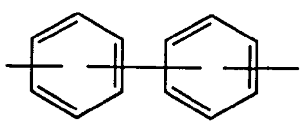 (IIIb), 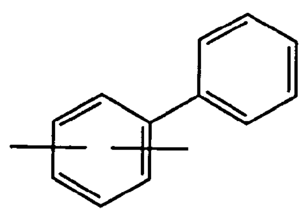 (IIIc),

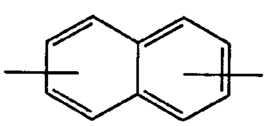 (IIId), 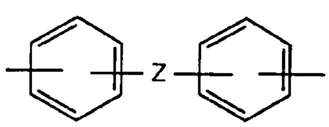 (IIIe),

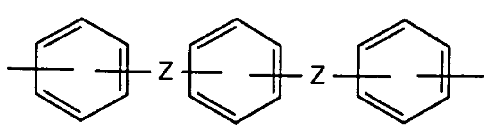 (IIIf),

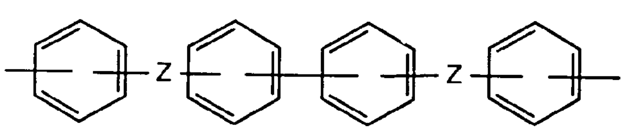 (IIIg),

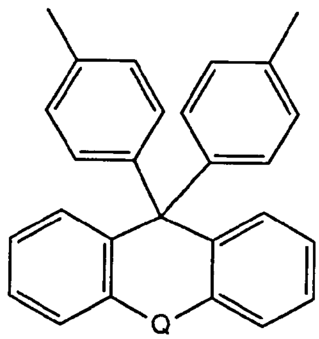 (IIIh), 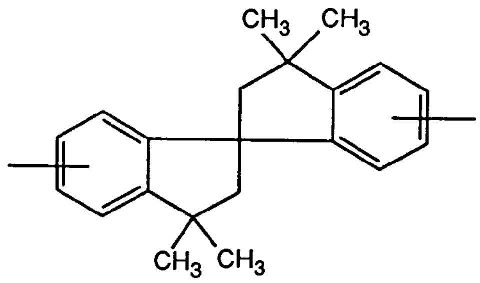 (IIIi),

wobei Z $-CH_2-$, $-C(CH_3)_2-$, $-C(CH_3)(C_6H_5)-$, $-C(CF_3)_2-$, -S-, -SO-, $-SO_2-$,

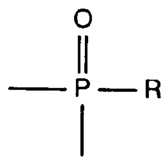 ,

worin R Methyl oder Phenyl ist, -O-, oder -CO- bedeutet und Q für eine direkte Bindung, $-CH_2-$, -O- oder -CO- steht.

In den erfindungsgemässen Polyarylenethern sind die aromatischen Gruppen vorzugsweise unsubstituiert.

Vorzugsweise enthalten die erfindungsgemässen Polyarylenether 100-10 mol-% einer wiederkehrenden Struktureinheit der Formel IVa oder IVb und 90-0 mol-% einer wiederkehrenden Struktureinheit der Formel V, worin $Ar_1$ einen Rest der Formel

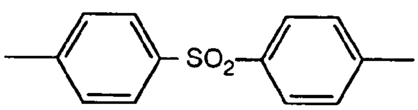 , 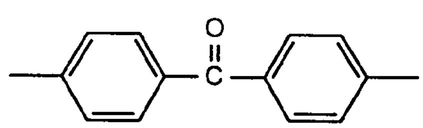 , 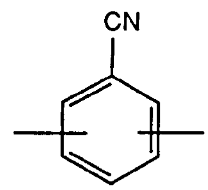 ,

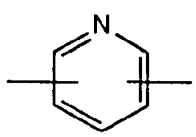 , oder 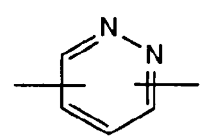

bedeutet und $Ar_2$ für einen Rest der Formeln

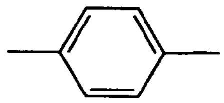 , 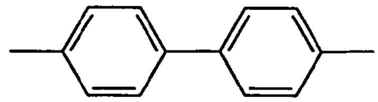 , 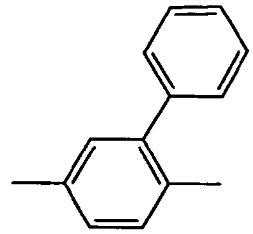 ,

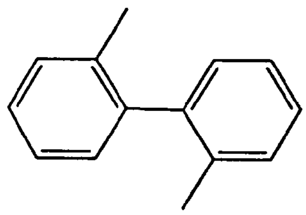 , 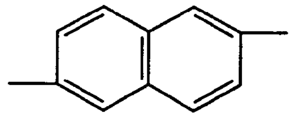 , 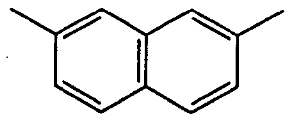 ,

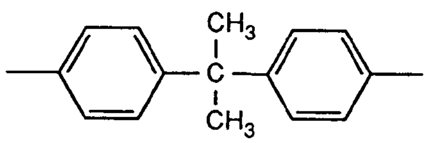 , 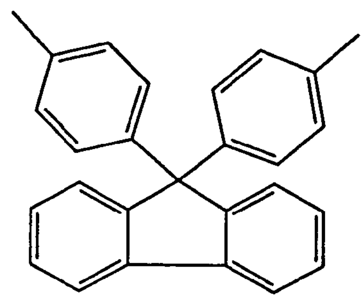 ,

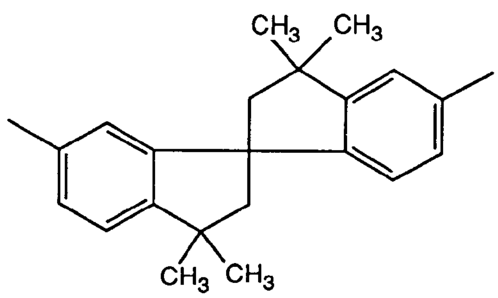 , 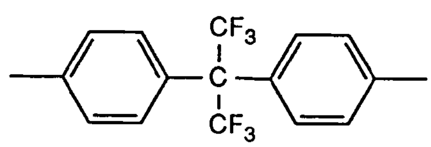 ,

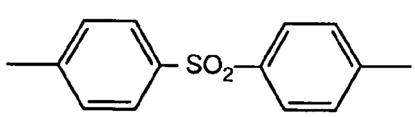 oder 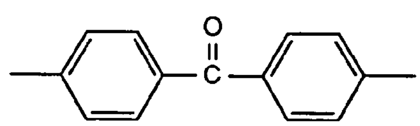 steht.

In besonders bevorzugten Polyarylenethern steht $Ar_1$ für einen Rest der Formel

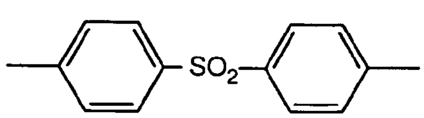 oder 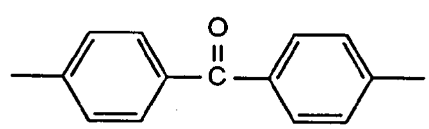

und $Ar_2$ für einen Rest der Formel

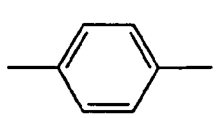 , 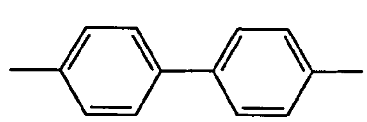 ,

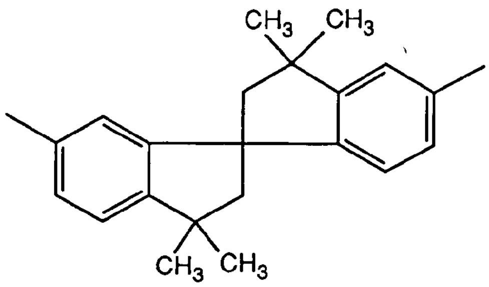 , 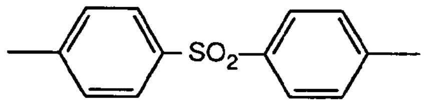 oder

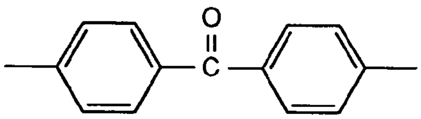 .

In ganz besonders bevorzugten Polyarylenethern steht $Ar_1$ für

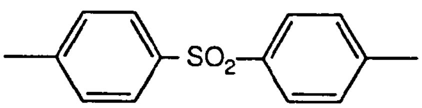 und $Ar_2$ für 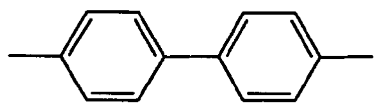 oder

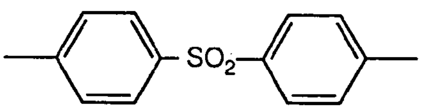 .

Die erfindungsgemässen im wesentlichen linearen Polymeren, enthaltend Struktureinheiten der Formel Ia oder Ib, können beispielsweise hergestellt werden, indem man ein unsubstituiertes oder durch ein oder mehrere ($C_1$-$C_4$)-Alkylgruppen, ($C_1$-$C_4$)-Alkoxygruppen oder Halogenatome substituiertes Bis-(hydroxyphenoxy)-naphthalin der Formel VIIa oder VIIb

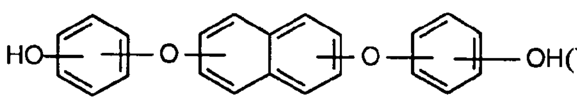 (VIIa),

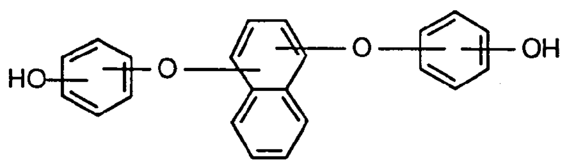 (VIIb),

oder ein Gemisch aus einem Bis-(hydroxyphenoxy)-naphthalin der Formel VIIa oder VIIb und einer darin bis zu 95 mol-% enthaltenen, vom Bis-(hydroxyphenoxy)-naphthalin der Formel VIIa oder VIIb verschiedenen Dihydroxyverbindung in äquimolaren Mengen mit einer Verbindung der Formel VIII

$$Z_1\text{-}R_1\text{-}Z_2 \qquad \text{(VIII)},$$

umsetzt, worin $R_1$ die gleiche Bedeutung wie in Formel I hat und $Z_1$ und $Z_2$ unabhängig voneinander je ein Halogenatom, vorzugsweise Fluor- oder Chloratom, oder einen Rest der Formeln $-SO_3H$, $-SO_3R_4$, $-SO_2Cl$, $-COOH$, $-COCl$, $-COOR_4$, $-OR_4$, $-O-COCl$, $-N=C=O$,

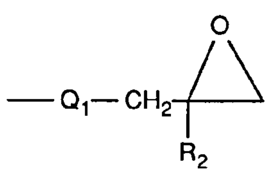 oder 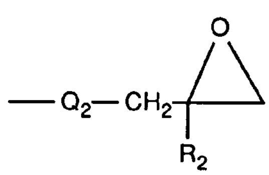

bedeuten, worin $R_4$ ($C_1$-$C_4$)-Alkyl oder Phenyl,
$R_2$ ein H-Atom oder Methyl und $Q_1$ und $Q_2$ -O-, -$NR_2$-, -S- oder -OCO- bedeutet.

Verbindungen der Formel VIIa sind beispielsweise im US-Patent 4,873,371 beschrieben.

Unter äquimolaren Mengen versteht man im Zusammenhang mit dem oben angegebenen Verfahren ein Molverhältnis des Bis-(hydroxyphenoxy)-naphthalins der Formel VIIa oder VIIb oder des Gemisches von Bis-(hydroxyphenoxy)-naphthalin und Dihydroxyverbindung zu der Verbindung der Formel VIII von 0,9 bis 1,1. Bevorzugt ist ein Molverhältnis von 0,95 bis 1,05.

Als Dihydroxyverbindungen, die von denen der Formel VIIa oder VIIb verschieden sind, eignen sich im allgemeinen aliphatische, cycloaliphatische und aromatische Dihydroxyverbindungen. Beispiele für geeignete Dihydroxyverbindungen sind:
Ethylenglykol, Diethylenglykol, Propan-1,2-diol, Propan-1,3-diol, Butan-1,4-diol, Poly-(oxyethylenglykol), Poly-(oxypropylenglykol), Poly-(oxybutylenglykol), Pentan-1,5-diol, Hexan-1,6-diol, Octan-1,8-diol, 2,2-Dimethylpropan-1,3-diol, trans-Tetramethylcyclobutandiol und 1,4-Bis-(hydroxymethyl)-cyclohexan, 1,1-Bis-(hydroxymethyl)-cyclohex-3-en, Bis-(4-hydroxycyclohexyl)-methan, 2,2-Bis-(4-hydroxycyclohexyl)-propan, Hydrochinon, Chlor-, Methyl-, 2,3-Dimethyl- oder Trimethylhydrochinon, Tetrafluorhydrochinon, Resorcin, 1,2-Bis-(4-hydroxyphenyl)-ethan, 2,2-Bis-(4-hydroxyphenyl)-propan (Bisphenol A), Tetrabrombisphenol A, Hexafluorbisphenol A, Bis-(4-hydroxyphenyl)-ether, Bis-(4-hydroxyphenyl)-sulfid, Bis-(4-hydroxyphenyl)-sulfon, Bis-(hydroxyphenyl)-methan (Bisphenol F), Bis-(4-hydroxy-3,5-dimethylphenyl)-methan, 2,2-Bis-(4-hydroxy-3-methylphenyl)-propan, 2,2-Bis-(4-hydroxy-3,5-dimethylphenyl)-propan, 2,2-Bis-(4-hydroxy-3,5-dichlorphenyl)-propan, Bis-(4-hydroxy-3,5-dimethylphenyl)-sulfid, Bis-(4-hydroxy-3,5-dimethylphenyl)-sulfon, 2,2-Bis-(4-hydroxy-3,5-dibromphenyl)-propan, 4,4'-Dihydroxybiphenyl, 4,4'-Dihydroxy-2,2'-dimethylbiphenyl, 2,2'-Dihydroxybiphenyl, 2,5-Dihydroxybiphenyl, 4,4'-Dihydroxyterphenyl, 4,4'-Dihydroxybenzophenon, 2,2'-Dihydroxybenzophenon, 4,4'-Dihydroxydiazo-diphenyl, 4,4'-Dihydroxyterephthalophenon, 4,4'-Dihydroxyisophthalophenon, 4,4'-Dihydroxytriphenylmethan, Phenolphthalein, Phenolsulfonphthalein, Fluorescein, 9,9-Bis-(4-hydroxyphenyl)-fluoren, 1,5-Dihydroxyanthrachinon, 2,6-Dihydroxyanthrachinon, 1,5-Dihydroxynaphthalin, 1,6-Dihydroxynaphthalin, 2,6-Dihydroxynaphthalin, 2,7-Di-hydroxynaphthalin, 4,5-Bis-(4-hydroxyphenyl)-2-phenylimidazol und 2,3-Bis-(4-hydroxyphenyl)-chinoxalin. Solche Dihydroxyverbindungen sind bekannt und zum Teil im Handel erhältlich.

Beispiele für geeignete polyetherbildende Halogenverbindungen der Formel VIII sind:
1,3-Dibrombenzol, 1,4-Dibrombenzol, 4,4'-Dibrombiphenyl, 4,4'-Dibrombenzophenon, 2,7-Dibrom-9-fluorenon, Bis-(1,3-chlormethyl)-benzol, Bis-(1,4-chlormethyl)-benzol, Bis-(1,4-brommethyl)-benzol, Bis-(1,5-chlormethyl)-naphthalin, Bis-(4-chlorphenyl)-sulfon, Bis-(4-fluorphenyl)-sulfon, Bis-(4-chlorphenyl)-keton, Bis-(4-fluorphenyl)-keton, 4,6-Di-chlor-2-phenyl-1,3,5-triazin, 4,6-Di-chlor-2-methyl-1,3,5-triazin, 4,6-Di-chlor-2-methoxy-1,3,5-triazin, 2,6-Dichlorpyridin, 2,6-Difluorbenzonitril, 2,6-Dichlorbenzonitril und 3,6-Dichlorpyridazin. Diese stellen ebenfalls bekannte Verbindung dar und sind kommerziell erhältlich.

Beispiele für geeignete Disulfonsäure(derivate) der Formel VIII sind:
1,3-Benzoldisulfonsäure, 1,4-Benzoldisulfonsäure, 4,4'-Biphenyldisulfonsäure, 4,4'-Oxy-bis-(benzolsulfonsäure), 4,4'-Sulfonyl-bis-(benzolsulfonsäure), 4,4'-Methylen-bis-(benzolsulfonsäure) und 2,2-Bis-(benzolsulfonsäure)-propan und die Disulfonsäuredichloride, die Disulfonsäuredialkylester mit 1 bis 4 C-Atomen im Alkylrest, der Disulfonsäurediphenylester und die Dinatriumsalze dieser Säuren. Auch diese Verbindungen sind bekannt.

Beispiele für geeignete polycarbonatbildende Verbindungen der Formel VIII sind
Phosgen, Chlorameisensäurealkyl- oder -phenylester, Kohlensäuredialkyl- oder -diphenylester oder Verbindungen der Formeln Cl-CO-O-$R_1$-O-COCl oder $R_4$O-CO-O-$R_1$-O-CO-O$R_4$, worin $R_1$ und $R_4$ die oben angegebene Bedeutung haben. Solche Verbindungen sind bekannt und zum Teil im Handel erhältlich.

Beispiele für geeignete Dicarbonsäuren oder deren Polyester bildende Derivate der Formel VIII sind:
Adipinsäure, Azelainsäure, Sebacinsäure, Suberinsäure, Pimelinsäure, Hexahydroterephthalsäure, Terephthalsäure, Isophthalsäure, 2,5-Dichlorterephthalsäure, 2,5-Dichlorisophthalsäure, 2-Phenylisophthalsäure, 5-Methylisophthalsäure, 4,4'-Biphenyldicarbonsäure, Diphenylsulfon-4,4'-dicarbonsäure, Diphenylether-4,4'-dicarbonsäure, Diphenylether-3,4'-dicarbonsäure, Diazodiphenyl-4,4'-dicarbonsäure, Diphenylmethan-4,4'-dicarbonsäure, 2,2-Bis-(4-benzoesäure)-propan, 2,2-Bis-(4-benzoesäure)-hexafluoropropan, Triphenylphosphinoxid-4,4'-dicarbonsäure, Diphenylmethylphosphinoxid-4,4'-dicarbonsäure, Naphthalin-2,6-dicarbonsäure, 1,4-Cyclohexandicarbonsäure, [2.2.2]-Bicyclooctandicarbonsäure und [3.2.2]-Bicyclononandicarbonsäure, sowie die Methyl-, Ethyl- oder Phenylester dieser Säuren oder deren Säurechloride. Auch diese bekannten Verbindungen sind zum Teil im Handel erhältlich.

Beispiele für geeignete Diisocyanate der Formel VIII sind:
Hexamethylendiisocyanat, Cyclohexan-1,4-diisocyanat, 2,4- und 2,6-Toluylendiisocyanat und deren Gemische, Isophorondiisocyanat (1-Isocyanatomethyl-5-isocyanato-1,3,3-trimethyl-cyclohexan), Phorondiisocyanat (2,2,4- bzw. 2,4,4-Trimethyl-hexamethylendiisocyanat-1,6), 1,5-Naphthalindiisocyanat, 1,3-Cyclopentylendiisocyanat, m- und p-Phenylendiisocyanat, 2,4,6-Toluylentriisocyanat, 4,4′,4″-Triphenylmethantriisocyanat, 1,3- und 1,4-Xylylendiisocyanat, 3,3′-Dimethyl-4,4′-diphenylmethandiisocyanat, 4,4′-Diphenyl-methandiisocyanat, 3,3′-Dimethylbiphenylendiisocyanat, 4,4′-Bisphenylendiisocyanat, Durendiisocyanat, 1-Phenoxy-2,4′-phenylendiisocyanat, 1-tert.-Butyl-2,4-phenylendiisocyanat, Methylen-bis-4,4′-cyclohexyldiisocyanat, 1-Chlor-2,4-phenylendiisocyanat und 4,4′-Diphenyletherdiisocyanat, welche bekannte Verbindungen darstellen.

Zur Herstellung der Phenoxyharze eignen sich als Diglycidylverbindungen der Formel VIII beispielsweise die Diglycidylether und Diglycidylester der oben aufgezählten Dihydroxyverbindungen und Dicarbonsäuren. Ferner können auch Di-S-glycidylverbindungen, wie beispielsweise Ethan-1,2-dithioldiglycidylether oder Bis-(4-glycidylthiomethylphenyl)-ether, oder Di-N-glycidylverbindungen, beispielsweise unsubstituiertes oder alkylsubstituiertes N,N′-Diglycidyl-5,5-dimethylhydantoin, als Diglycidylverbindungen der Formel VIII eingesetzt werden. Vorzugsweise verwendet man als Diglycidylverbindung einen Diglycidylether eines Bisphenols, insbesondere des Bisphenols A oder F. Diese Diglycidylverbindungen sind ebenfalls bekannt und zum Teil im Handel erhältlich.

Ausserdem können als Verbindung der Formel VIII auch solche mit verschiedenen funktionellen Gruppen verwendet werden, beispielsweise Isocyanatocarbonsäurehalogenide, wie 4-Isocyanatophenylcarbonsäurechlorid, Isocyanatosulfonsäurehalogenide, wie 4-Isocyanatophenylsulfonsäurechlorid, oder Halogencarbonyloxycarbonsäurehalogenide, wie 4-Chlorcarbonyloxyphenylcarbonsäurechlorid.

Wie bereits erwähnt wurde, können die erfindungsgemässen Polymeren noch mit anderen Monomeren, die sich mit den Monomeren der Polymeren copolymerisieren lassen, modifiziert sein. Solche Monomere sind beispielsweise Hydroxycarbonsäuren, Hydroxysulfonsäuren oder Aminophenole.

Beispiele für geeignete Hydroxycarbonsäuren oder deren polyesterbildende Derivate sind:
4-Hydroxybenzoesäure, 3-Chlor-4-hydroxybenzoesäure, 3,5-Dichlor-4-hydroxybenzoesäure, 3-Methyl-4-hydroxybenzoesäure, 3-Brom-4-hydroxybenzoesäure, 3,5-Dimethyl-4-hydroxybenzoesäure, 3-Methoxy-4-hydroxybenzoesäure, 6-Hydroxy-2-naphthoesäure, 6-Hydroxy-5-chlor-2-naphthoesäure und 6-Hydroxy-5-methyl-2-naphthoesäure sowie die Methyl-, Ethyl- oder Phenylester dieser Säuren oder deren Säurechloride, sowie die Monoester dieser Phenole, wie die Acetate.

Beispiele für geeignete Hydroxysulfonsäuren oder deren polyesterbildende Derivate sind die Analogen der oben aufgezählten Hydroxycarbonsäure(derivate), bei denen die Carboxylgruppe durch eine Sulfonsäuregruppe ersetzt ist.

Beispiele für geeignete Aminophenole sind:
3- oder 4-Aminophenol, 2-Hydroxy-5-amino-naphthalin, 2-Hydroxy-6-amino-naphthalin oder 2-Hydroxy-7-amino-naphthalin.

Die Herstellung der besonders bevorzugten Polyarylenether erfolgt beispielsweise durch Polykondensation eines Bis-(hydroxyphenoxy)naphthalins der Formel VIIa oder VIIb, eines Gemisches aus einem Bis-(hydroxyphenoxy)naphthalin der Formel VIIa oder VIIb oder deren Alkali- oder Erdalkalisalze und einer darin bis zu 95 mol-% enthaltenen Dihydroxyverbindung der Formel IX

$$HO\text{-}Ar_2\text{-}OH \qquad (IX)$$

oder deren Alkali- oder Erdalkalisalze, worin $Ar_2$ die gleiche Bedeutung wie in Formel V hat, mit einer äquimolaren Menge einer Dihalogenverbindung der Formel X

$$Hal{-}Ar_1{-}Hal \qquad (X)$$

worin $Ar_1$ die in Formel IVa oder IVb angegebene Bedeutung hat und Hal für Halogen, insbesondere Fluor oder Chlor steht, in Gegenwart von Alkali in einem aprotischen Lösungsmittel, bis der erhaltene Polyarylenether eine reduzierte Viskosität von 0,1 bis 2,5 dl/g, vorzugsweise von 0,15 bis 1,8 dl/g insbesondere von 0,2 bis 1,5 dl/g, aufweist, gemessen an einer Lösung von 1 g Polymeren in 100 ml N-Methylpyrrolidon (NMP) bei 25°C.

Die Reaktion wird zweckmässig bei erhöhter Temperatur durchgeführt, vorzugsweise bis zur Rückflusstemperatur des Lösungsmittels, also etwa bis 350°C.

Häufig empfiehlt sich die Mitverwendung eines Schleppmittels, wie z.B. Chlorbenzol, Xylol oder Toluol, um das bei der Umsetzung gebildete Wasser azeotrop aus dem Reaktionsgemisch entfernen zu können.

Als Alkali verwendet man in diesem Verfahren in der Regel Alkali- und Erdalkalicarbonate, wie Natrium-, Kalium- oder Calciumcarbonat; doch können auch andere alkalische Reagentien, wie Natriumhydroxid, Kaliumhydroxid oder Calciumhydroxid, Verwendung finden.

Polare, aprotische Lösungsmittel, die beim Verfahren zur Herstellung der erfindungsgemässen Polyetherharze eingesetzt werden können, sind beispielsweise Dimethylsulfoxid, Dimethylacetamid, Diethylacetamid, Tetramethylharnstoff, N-Methylcaprolactam, N-Methylpyrrolidon und bevorzugt Diphenylsulfon.

Geeignete polyetherbildende Dihydroxyverbindungen der Formel IX sind beispielsweise:
Hydrochinon, Chlor-, Methyl-, 2,3-Dimethyl- oder Trimethylhydrochinon, Tetrafluorhydrochinon, Resorcin, 2,2-Bis-(4-hydroxyphenyl)-propan (Bisphenol A), Tetrabrombisphenol A, Hexafluorbisphenol A, Bis-(4-hydroxyphenyl)-ether, Bis-(4-hydroxyphenyl)-sulfid, Bis-(4-hydroxyphenyl)-sulfon, Bis-(hydroxyphenyl)-methan (Bisphenol F), Bis-(4-hydroxy-3,5-dimethylphenyl)-methan, 2,2-Bis-(4-hydroxy-3-methylphenyl)-propan, 2,2-Bis-(4-hydroxy-3,5-dimethylphenyl)-propan, 2,2-Bis-(4-hydroxy-3,5-dichlorphenyl)-propan, Bis-(4-hydroxy-3,5-dimethylphenyl)-sulfid, Bis-(4-hydroxy-3,5-dimethylphenyl)-sulfon, 2,2-Bis-(4-hydroxy-3,5-dibromphenyl)-propan, 4,4′-Dihydroxybiphenyl, 4,4′-Dihydroxy-2,2′-dimethylbiphenyl, 2,2′-Dihydroxybiphenyl, 2,5-Dihydroxybiphenyl, 4,4′-Dihydroxyterphenyl, 4,4′-Dihydroxybenzophenon, 2,2′-Dihydroxybenzophenon, 4,4′-Dihydroxyterephthalophenon, 4,4′-Dihydroxyisophthalophenon, 1,5-Dihydroxynaphthalin, 1,6-Dihydroxynaphthalin, 2,6-Dihydroxynaphthalin, 2,7-Di-hydroxynaphthalin, 9,9-Bis(4-hydroxyphenyl)fluoren, 6,6′-Dihydroxy-3,3,3′3′-tetramethyl-1,1′-spirobiindan.
Solche Dihydroxyverbindungen sind bekannt und zum Teil im Handel erhältlich.

Geeignete Dihalogenverbindungen der Formel X sind beispielsweise:
4,4′-Dibrombenzophenon, Bis-(4-chlorphenyl)-sulfon, Bis-(4-fluorphenyl)-sulfon, Bis-(4-chlorphenyl)-keton, Bis-(4-fluorphenyl)-keton, 2,6-Dichlorpyridin, 2,6-Difluorbenzonitril, 2,6-Dichlorbenzonitril, 3,6-Dichlorpyridazin. Diese Verbindungen sind ebenfalls bekannt und kommerziell erhältlich.

Die Herstellung der erfindungsgemässen Polymeren, die durch Umsetzung eines Bis-(hydroxyphenoxy)-naphthalins der Formel VIIa oder VIIb mit einer Disulfonsäure, einem Disulfonsäurediester oder -dichlorid erhalten werden, kann in der Schmelze oder in Lösung, beispielsweise als Grenzflächenpolykondensation in einem inerten Lösungsmittel und in Gegenwart einer Base, beispielsweise von Kaliumcarbonat, Kaliumhydroxid, Natriumcarbonat oder Natriumhydroxid, erfolgen.

Die Herstellung der erfindungsgemässen Polymeren, die durch Umsetzung eines Bis-(hydroxyphenoxy)naphthalins der Formel VIIa oder VIIb mit einer Dicarbonsäure oder deren polyesterbildenden Derivaten und gegebenenfalls weiteren Dihydroxyverbindungen und/oder Aminoalkoholen und/oder Hydroxycarbonsäuren und/oder Hydroxysulfonsäuren oder den polyesterbildenden Derivaten dieser Säuren erhalten werden, kann beispielsweise durch Umesterung von geeigneten Dicarbonsäureestern mit Diphenolen, sowie durch Umesterung der freien Säure mit Diphenolderivaten, wie z.B. den Diacetaten, in der Schmelze und gegebenenfalls in Gegenwart von basischen oder sauren Katalysatoren erfolgen. Geeignete Katalysatoren sind Dibutylzinnoxid, p-Toluolsulfonsäure, Bortrifluorid, Titandioxid, Calciumacetat, Manganacetat, Zinkacetat oder Antimonoxid.

Die Herstellung der Polyester kann auch durch Grenzflächenpolykondensation oder durch Polykondensation in einem inerten Lösungsmittel erfolgen. Je nach der Aktivität der eingesetzten Monomeren kann die Polykondensation bei erhöhten Temperaturen oder bei Temperaturen bis unterhalb Raumtemperatur durchgeführt werden.

Die Herstellung der erfindungsgemässen Polymeren, die durch Polyaddition eines Bis-(hydroxyphenoxy)naphthalins der Formel VIIa oder VIIb mit einer Diglycidylverbindung erhalten werden, kann ebenfalls sowohl in der Schmelze als auch in Lösung erfolgen. Die Herstellung von sogenannten Phenoxyharzen ist an sich bekannt und wird beispielsweise im DE-Patent 1935 115 beschrieben.

Die Herstellung der erfindungsgemässen Polycarbonate erfolgt beispielsweise durch Umesterung von Diphenylcarbonat mit Bis-(hydroxyphenoxy)naphthalinen der Formel VIIa oder VIIb in der Schmelze und in Gegenwart von basischen Katalysatoren, wie LiOH oder NaOH, oder durch Umsetzung von Bis-(hydroxyphenoxy)-naphthalinen der Formel VIIa oder VIIb mit Phosgen oder einer Bis-chlorcarbonylverbindung in einem inerten Lösungsmittel. Die Umsetzung mit Phosgen oder einer Bis-chlorcarbonylverbindung kann auch durch Grenzflächenpolykondensation des Phenolats in einem Gemisch aus Wasser und einem inerten Lösungsmittel erfolgen.

Die Herstellung von erfindungsgemässen Polymeren, die durch stufenweise Polyaddition von Diisocyanaten an Verbindungen der Formel VIIa oder VIIb erhalten werden, wird nach den in der Polyurethanchemie üblichen Verfahren durchgeführt. Als Katalysatoren verwendet man meist tert. Amine oder zinnorganische Verbindungen.

Weitere erfindungsgemässe Verbindungen, welche sich vom Bis-(hydroxyphenoxy)-naphthalin der Formel VIIa oder VIIb ableiten, stellen die Diglycidylether der Formel XIa oder XIb dar,

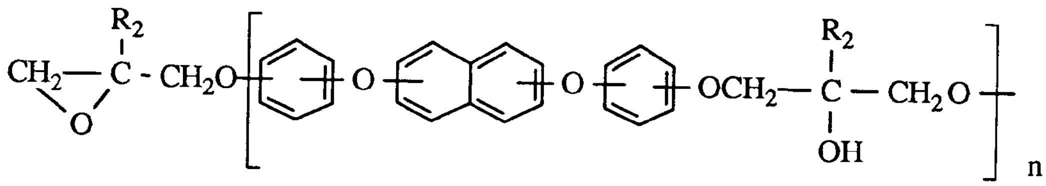

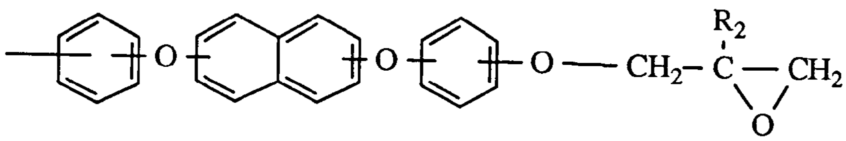

(XIa),

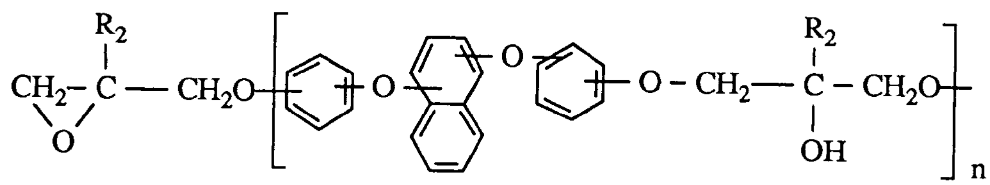

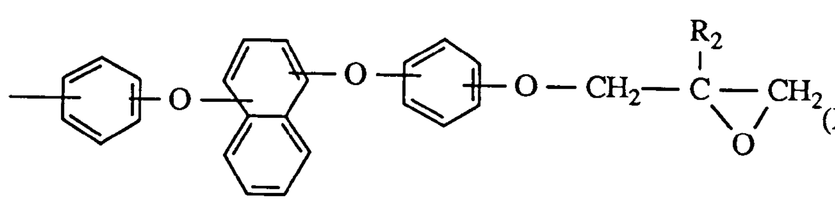

(XIb),

worin die aromatischen Ringe unsubstituiert oder durch ein oder mehrere ($C_1$-$C_4$)-Alkylgruppen, ($C_1$-$C_4$)-Alkoxygruppen, Phenylgruppen oder Halogenatome substituiert sind, $R_2$ für ein H-Atom oder Methyl steht und n Null oder eine Zahl von 1 bis 20 ist.

Solche Diglycidylether werden in bekannter Weise durch Umsetzen eines Bis-(hydroxyphenoxy)naphthalins der Formel VIIa oder VIIb mit Epichlorhydrin oder β-Methylepichlorhydrin in Gegenwart von Natronlauge und anschliessende Dehydrochlorierung des in Zwischenstufe erhaltenen Chlorhydrinethers erhalten. Verfahren zur Herstellung von Diglycidylethern werden beispielsweise im "Handbook of Epoxy Resins" von H. Lee und K. Neville (Mc Graw-Hill Book Company, 1967), im Kapitel 2, Seite 3 ff näher beschrieben.

Die Erfindung betrifft weiterhin unsubstituierte oder durch eine oder mehrere ($C_1$-$C_4$)-Alkylgruppen, ($C_1$-$C_4$)-Alkoxygruppen, Phenylgruppen oder Halogenatome substituierte Verbindungen der Formel XIIa oder XIIb

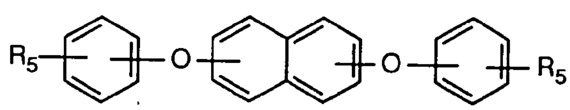

(XIIa),

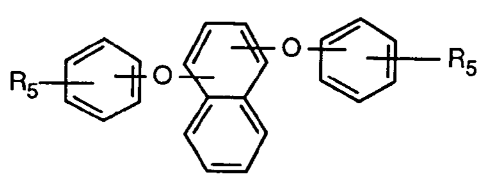

(XIIb),

worin $R_5$ für ($C_2$-$C_5$)-Acyl oder ($C_2$-$C_5$)-Acyloxy steht.

In bevorzugten Verbindungen der Formeln XIIa oder XIIb sind die aromatischen Ringe unsubstituiert.

Die Reste $R_5$ befinden sich vorzugsweise in para-Stellung zum Ether-Sauerstoff.

Beispiele für Acyl- oder Acyloxygruppen sind Acetyl, Propionyl, n-Butyryl, iso-Butyryl, Acetyloxy, Propionyloxy, n-Butyryloxy und iso-Butyryloxy.

Die erfindungsgemässen Verbindungen der Formeln XIIa und XIIb können nach an sich bekannten Methoden, wie beispielsweise in der DE-OS 3 636 561 beschrieben, synthetisiert und in die Dihydroxyverbindungen der Formel VIIa oder VIIIa überführt werden, indem man zum Beispiel

a) ein unsubstituiertes oder durch ein oder mehrere ($C_1$-$C_4$)-Alkylgruppen, ($C_1$-$C_4$)-Alkoxygruppen, Phe-

nylgruppen oder Halogenatome substituiertes Dihydroxynaphthalin der Formel XIIIa oder XIIIb,

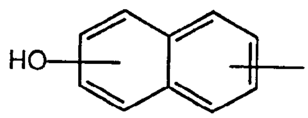 (XIIIa), 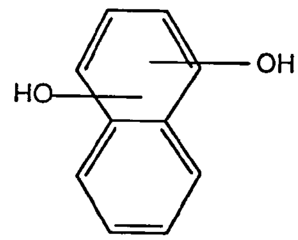 (XIIIb),

mit einem unsubstituierten oder durch ein oder mehrere ($C_1$-$C_4$)-Alkylgruppen, ($C_1$-$C_4$)-Alkoxygruppen, Phenylgruppen oder Halogenatomen substituierten Halogenbenzol der Formel XIV,

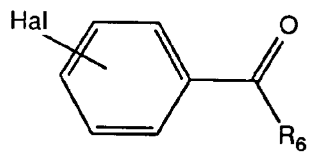 (XIV),

worin Hal für Halogen, insbesondere Fluor oder Chlor, steht und $R_6$ ($C_1$-$C_4$)-Alkyl bedeutet, in Gegenwart von Alkali zu einem Bis-(acylphenoxy)naphthalin der Formel XIIa oder XIIb mit $R_5$=($C_2$-$C_5$)-Acyl umsetzt,
b) gegebenenfalls das Bis-(acylphenoxy)naphthalin mit einer Persäure zu einem Bis-(acyloxyphenoxy)naphthalin der Formel XIIa oder XIIb mit $R_5$=($C_2$-$C_5$)-Acyloxy oxidiert,
c) gegebenenfalls das Bis-(acyloxyphenoxy)naphthalin alkalisch hydrolysiert.

Als geeignete Dihydroxynapthaline der Formeln XIIIa oder XIIIb können genannt werden: 1,3-Dihydroxynaphthalin, 1,4-Dihydroxynaphthalin, 1,5-Dihydroxynaphthalin, 1,6-Dihydroxynaphthalin, 1,7-Dihydroxynaphthalin, 2,6-Dihydroxynaphthalin, 2,7-Dihydroxynaphthalin.

Die Umsetzung des Dihydroxynaphthalins mit dem Acylhalogenbenzol wird vorzugsweise in einem aprotisch polaren Lösungsmittel wie etwa N-Methylpyrrolidon bei erhöhter Temperatur und in Gegenwart einer organischen oder anorganischen Base wie etwa Alkalimetallcarbonat oder Alkalimetallhydroxid durchgeführt.

Als Oxidationsmittel für die Baeyer-Villiger-Oxidation der Bis-(acylphenoxy)-naphthaline sind anorganische oder organische Persäuren wie beispielsweise Perschwefelsäure, Permonophosphorsäure, Chlorperbenzoesäure und insbesondere Peressigsäure geeignet. Die Reaktion wird im allgemeinen unter Bedingungen durchgeführt, wie sie z.B. in Org. React. 9, 73-107 (1957) beschrieben sind.

Die erfindungsgemässen Polymeren, insbesondere die aromatischen Polyether, Polyetherketone oder Polyethersulfone, können in der für Thermoplaste üblichen Weise eingesetzt werden und z.B. zu Formkörpern oder Folien verarbeitet werden, oder als Matrixharze, Klebstoffe oder Ueberzugsmittel eingesetzt werden.

Die erfindungsgemässen Diglycidylether können in der für Epoxidharze üblichen Weise eingesetzt werden. Sie eignen sich vor allem in Kombination mit an sich üblichen Härtern und gegebenenfalls Härtungsbeschleunigern zur Herstellung von vernetzten Produkten. Gegebenenfalls setzt man auch Gemische der erfindungsgemässen Diglycidylether mit anderen an sich üblichen Epoxidharzen ein.

Beispiele für Epoxidhärter sind Polyamine mit mindestens zwei primären und/oder sekundären Aminogruppen, Amide einschliesslich der substituierten Harnstoffe, Polyaminoamide, Polyphenole, Polythiole, Polycarbonsäuren und insbesondere deren Anhydride, katalytisch wirkende Härtungsmittel, wie beispielsweise tertiäre Amine, Imidazole oder Mannichbasen, Zinnsalze von Alkansäuren, Friedel-Crafts-Katalysatoren und deren Komplexe und Chelate, oder Amidine, wie beispielsweise Dicyandiamid.

Beispiele für Härtungsbeschleuniger sind tertiäre Amine, deren Salze oder quaternäre Ammoniumverbindungen oder subsbtuierte Harnstoffe. Diese Härter und Härtungsbeschleuniger sind dem Fachmann auf dem Gebiet der Epoxidverarbeitung an sich bekannt und beispielsweise im "Handbook of Epoxy Resins" von Lee and Neville beschrieben.

Vor der Verarbeitung der beispielsweise als Presspulver, Schmelze oder insbesondere als Lösung vorliegenden Polymeren können übliche Zusatzstoffe, wie beispielsweise Füllstoffe, Pigmente, Stabilisatoren oder Verstärkungsmittel, wie Kohlenstoff-, Bor-, Metall- oder Glasfasern, zugegeben werden. Die erfindungsgemässen Polymeren können auch zusammen mit anderen Thermoplasten oder Duromeren verarbeitet werden.

Vorzugsweise eignen sich die erfindungsgemässen Polymeren, insbesondere die aromatischen Polyether, Polyetherketone oder Polyethersulfone, als Matrixharze für die Herstellung von Faserverbundsystemen, wobei man als Verstärkungsfasern die üblichen bei der Verstärkung technischer Werkstoffe verwendeten Fasern einsetzen kann. Diese können organische oder anorganische Fasern, Naturfasern oder Synthesefasern sein, und als Faserbündel, als orientierte oder nicht-orientierte Fasern oder als Endlosfasern vorliegen.

Eine weitere bevorzugte Anwendungsmöglichkeit für die erfindungsgemässen Polymeren, insbesondere für die aromatischen Polyether, Polyetherketone oder Polyethersulfone, besteht in der Modifizierung anderer Kunststoffe. Diese können grundsätzlich Thermoplaste oder Duromere sein. Besondere Bedeutung erlangen solche Systeme als Matrixharze, welche zur Herstellung von Verbundbauteilen zum Einsatz gelangen.

Besonders hervorzuheben ist die unerwartet hohe Löslichkeit der erfindungsgemässen Polymeren in einer Reihe von herkömmlichen organischen Lösungsmitteln, wie in aprotisch polaren Lösungsmitteln oder fluorierten oder chlorierten Kohlenwasserstoffen, und die sehr gute Stabilität dieser Lösungen. Beispiele für geeignete Lösungsmittel sind aprotisch polare Lösungsmittel, wie N-Methylpyrrolidon, Dimethylsulfoxid, Dimethylacetamid, Dimethylformamid oder γ-Butyrolacton, fluorierte oder chlorierte aliphatische und aromatische Kohlenwasserstoffe, wie Methylenchlorid, Tri-oder Tetra-chlorethan, 1,2-Dichlorethan, oder cyclische Ether, wie Tetrahydrofuran, Dioxan oder 1,3-Dioxolan sowie auch zyklische Ketone wie Cyclohexanon oder Cyclopentanon.

Die Erfindung betrifft daher auch eine Lösung enthaltend etwa 1 bis 75 Gew.%, vorzugsweise 5 bis 50 Gew.%, bezogen auf die Lösung, eines erfindungsgemässen Polymers, vorzugsweise eines erfindungsgemässen aromatischen Polymers, insbesondere eines erfindungsgemässen Polyarylenetherketons oder Polyarylenethersulfons gelöst in einem organischen Lösungsmittel.

## I. Herstellung von Auspangsstoffen

### I.1. 2,7-Bis-(4-acetylphenoxy)-naphthalin

Zu einer am Wasserabscheider unter Rückfluss kochenden Suspension von 240 g (1,5 mol) 2,7-Dihydroxynaphthalin und 466 g (3,37 mol) Kaliumcarbonat in 940 ml 1-Methyl-2-pyrrolidon (NMP) und 565 ml Xylol werden bei 145°C 363 ml (3 mol) 4-Fluoracetophenon zugetropft. Nach beendeter Zugabe wird bis zum Verschwinden der Edukte am Wasserabscheider unter Rückfluss erhitzt (20-40 h).
Anschliessend wird das Xylol aus dem Reaktionsgefäss abdestilliert und die verbleibende Suspension nach Abkühlen auf Raumtemperatur auf 151 Wasser gegossen. Der Niederschlag wird abfiltriert, ein zweites Mal in 51 Wasser gemixt, filtriert und mit Wasser gewaschen.
Das Rohprodukt wird im Vakuumtrockenschrank bei 80 °C getrocknet. Zweimalige Umkristallisation aus Toluol ergibt 410 g 2,7-Bis-(4-acetylphenoxy)-naphthalin (Fp.= 154-157 °C).

### I.2. 2,6-Bis-(4-acetylphenoxy)-naphthalin

Analog zum im Beispiel I.1. beschriebenen Verfahren wird aus 2,6-Dihydroxynaphthalin 2,6-Bis-(4-acetylphenoxy)-naphthalin hergestellt, Fp.= 201-203 °C (aus Xylol).

### I.3. 1,5-Bis-(4-acetylphenoxy)-naphthalin

Analog zum im Beispiel I.1. beschriebenen Verfahren wird aus 1,5-Dihydroxynaphthalin 1,5-Bis-(4-acetylphenoxy)-naphthalin hergestellt, Fp.= 204-207 °C (aus N,N-Dimethylformamid/Ethanol).

### I.4. 2,7-Bis-(4-acetoxyphenoxy)-naphthalin

Zu einer Suspension von 235 g (0,6 mol) 2,7-Bis-(4-acetylphenoxy)-naphthalin in 2,3 l Dioxan werden bei Raumtemperatur und unter Stickstoff 325 ml 40%ige Peressigsäure gefolgt von 190 ml 70%iger Perchlorsäure zugetropft. Unter Kühlen mit einem Wasserbad wird die Temperatur bei 30 °C gehalten. Es wird 5 h bei 25-30 °C gerührt und die Reaktionslösung auf 10 l Wasser gegossen. Restliches Peroxid wird durch Zugabe von Natriumsulfid zerstört. Das Produkt wird abfiltriert, mit Wasser gewaschen und ohne Trocknung dem nächsten Syntheseschritt unterworfen.

### I.5. 2,7-Bis-(4-hydroxyphenoxy)-naphthalin

Eine Lösung von 0,6 mol 2,7-Bis-(4-acetoxyphenoxy)-naphthalin und 267 g (4,76 mol) Kaliumhydroxid in 1,61 Wasser und 480 ml Ethanol wird 3,5 h unter Rückfluss erhitzt. Nach Abkühlen auf Raumtemperatur wird die Lösung unter Mixen auf 10 l 10% HCl/Eis gegossen, der Niederschlag abfiltriert und mit Wasser neutral gewaschen. Nach Trocknen im Vakuumtrockenschrank bei 80 °C erhält man 173 g Rohprodukt.
Aus 112 g Rohprodukt erhält man durch chromatographische Reinigung an Kieselgel 60 (230-400 mesh) mit

Hexan/Tetrahydrofuran 2:1 als Elutionsmittel 58 g 2,7-Bis-(4-hydroxyphenoxy)-naphthalin (Fp. = 179-181°C).
Elementaranalyse berechnet für $C_{22}H_{16}O_4$:
Ber. = C: 76,73 H: 4,68
Gef. = C: 76,65 H: 4,69

I.6. 2,6-Bis-(4-hydroxyphenoxy)-naphthalin

Analog zum im Beispiel I.4. und I.5. beschriebenen Verfahren wird aus 2,6-Bis-(4-acetylphenoxy)-naphthalin 2,6-Bis-(4-hydroxyphenoxy)-naphthalin hergestellt (Fp. = 196-198°C).
Elementaranalyse berechnet für $C_{22}H_{16}O_4$:
Ber. = C: 76,73 H: 4,68
Gef. = C: 76,66 H: 4,96

I.7. 2,7-Bis-(4-hydroxyphenoxy)-naphthalin-diglycidylether

Zu einer Suspension von 24,3 g (0,071 mol) 2,7-Bis-(4-hydroxyphenoxy)-naphthalin und 76,6 ml (0,99 mol) Epichlorhydrin werden bei 60 °C 0,5 g Tetramethylammoniumchlorid in 0,5 ml Wasser zugegeben. Es wird 90 min bei 110 °C gerührt und wieder auf 60 °C abgekühlt. Anschliessend werden bei 60 °C und einem Innendruck von etwa 140 mbar (Wasserstrahlvakuum) eine 50%ige Lösung von 6,82 g (0,17 mol) Natriumhydroxid langsam zugetropft. Nach beendeter Zugabe wird 3 h bei 60 °C und einem Innendruck von etwa 150 mbar am Wasserabscheider gekocht. Nach dem Abkühlen auf Raumtemperatur wird die Reaktionslösung filtriert und der Rückstand mit 50 ml Methylenchlorid gewaschen. Die vereinigten organischen Phasen werden mit 50 ml Wasser, 50 ml 10%iger Ammoniumchloridlösung und wieder mit 50 ml Wasser gewaschen, über Natriumsulfat getrocknet und am Rotationsverdampfer eingedampft. Nach dem Trocknen im Hochvakuum (etwa 0,01 mbar) bei 90 °C verbleiben 29,1 g (90%) gelber Feststoff mit einem Schmelzbereich von 82-85 °C.
Epoxidgehalt (titriert): 4,1 Aequ./kg (entspricht 93,6%);
Viskosität: 1190 mPas bei 160 °C.

I.8. 2,6-Bis-(4-hydroxyphenoxy)-naphthalin-diglycidylether

Analog zum im Beispiel I.7. beschriebenen Verfahren wird aus 2,6-Bis-(4-hydroxyphenoxy)-naphthalin 2,6-Bis-(4-hydroxyphenoxy)-naphthalin-diglycidylether hergestellt. Man erhält einen gelben Feststoff mit einem Schmelzbereich von 137-140 °C.
Epoxidgehalt (titriert): 4,2 Aequ./kg (entspricht 95,8%);
Viskosität: 1190 mPas bei 160 °C.

II. Polymerbeispiele

II.1. Polyethersulfon aus 2,6-Bis-(4-hydroxyphenoxy)naphthalin und 4,4′-Dichlordiphenylsulfon

In einem Rundkolben mit Rührer und Schutzgasanschluss wird unter Stickstoff eine Mischung aus 17,25 g (0,0501 mol) 2,6-Bis-(4-hydroxyphenoxy)naphthalin, 50,0 g Diphenylsulfon, 7,87 g (0,0569 mol) Kaliumcarbonat und 52 g Xylol bei einer Badtemperatur von 200 °C erhitzt und ein Xylo/Wasser-Gemisch abdestilliert. Gegen Ende des Destillationsvorgangs wird dabei kurzzeitig Vakuum (2 mbar) angelegt. Sodann werden 14,48 g (0,0504 mol) 4,4′-Dichlordiphenylsulfon zu der Reaktionsmischung gegeben, die Temperatur innerhalb von 25 Minuten auf 250 °C erhöht und dort 1 h belassen. Danach wird die Temperatur auf 275 °C (1 h) und anschliessend auf 300 °C angehoben. Diese Temperatur wird 3 h beibehalten, wobei die Reaktionsmischung in zunehmendem Masse viskos wird.

Nach Abkühlen wird das Reaktionsgemisch dem Kolben entnommen, pulverisiert, mit verdünnter Essigsäure versetzt und zunächst mit Wasser und dann mit einem Wasser/Aceton-Gemisch (1:4) extrahiert. Anschliessend wird das Polymere in Methylenchlorid gelöst, eine geringe Menge unlösliches Material abfiltriert und in Isopropanol ausgefällt. Das so gereinigte Polymere wird im Vakuumtrockenschrank bis zu einer Temperatur von 240 °C getrocknet. Ein auf diese Weise hergestelltes Polyarylenethersulfon besitzt eine reduzierte Viskositätvon 0,57 dl/g, gemessen an einer Lösung von 1 g Polymeren in 100 ml N-Methylpyrrolidon (NMP) bei 25°C. Es ist zu mehr als 25 % in Methylenchlorid löslich. Die durch DSC bestimmte Glasübergangstemperatur liegt bei 183 °C.

II.2. Polyethersulfon aus 2,7-Bis(4-hydroxyphenoxy)naphthalin und 4,4′-Dichlordiphenylsulfon

Analog zum im Beispiel II.1. beschriebenen Verfahren wird ein Polyethersulfon aus 2,7-Bis-(hydroxyphenoxy)naphthalin (0,0500 mol) und 4,4′-Dichlordiphenylsulfon (0,0504 mol) mit Kaliumcarbonat (0,0572 mol) hergestellt (Reaktionsbedingungen: 1 h/250 °C, 1 h/275 °C, 3 h/300 °C). Das resultierende Polymere (red. Visk. = 0,80 dl/g) besitzt eine Glasübergangstemperatur von 185 °C. Es ist zu mehr als 25 % in Methylenchlorid löslich.

II.3. Polyethersulfon-Copolymeres aus 2,6-Bis(4-hydroxyphenoxy)naphthalin, 4,4′-Dihydroxydiphenylsulfon und 4,4′-Dichlordiphenylsulfon

Analog zum im Beispiel II.1. beschriebenen Verfahren wird ein Polyethersulfon aus 2,6-Bis(4-hydroxyphenoxy)naphthalin (0,0252 mol), 4,4′-Dihydroxydiphenylsulfon (0,0754 mol) und 4,4′-Dichlordiphenylsulfon (0, 1002 mol) mit Kaliumcarbonat (0, 1167 mol) hergestellt (Reaktionsbedingungen: 1 h/250 °C, 3 h/320 °C). Das resultierende Polymere (red. Visk. = 1,47 dl/g) besitzt eine Glasübergangstemperatur von 203 °C. Es ist zu mehr als 25 % in Methylenchlorid löslich.

II.4. Polyethersulfon-Copolymeres aus 2,6-Bis(4-hydroxyphenoxy)naphthalin, 4,4′-Dihydroxydiphenylsulfon und 4,4′-Dichlordiphenylsulfon

Analog zum im Beispiel II.1. beschriebenen Verfahren wird ein Polyethersulfon aus 2,6-Bis(4-hydroxyphenoxy)naphthalin (0,0251 mol), 4,4′-Dihydroxydiphenylsulfon (0,0750 mol) und 4,4′-Dichlordiphenylsulfon (0,1000 mol) mit Kaliumcarbonat (0, 1056 mol) hergestellt (Reaktionsbedingungen: 1 h/250 °C, 1 h/275 °C, 3 h/300 °C). Das resultierende Polymere (red. Visk. = 2, 15 dl/g) besitzt eine Glasübergangstemperatur von 220 °C. Es ist zu mehr als 25 % in Methylenchlorid löslich.

II.5. Polyethersulfon-Copolymeres aus 2,7-Bis-(4-hydroxyphenoxy)naphthalin, 4,4′-Dihydroxydiphenylsulfon und 4,4′-Dichlordiphenylsulfon

Analog zum im Beispiel II.1. beschriebenen Verfahren wird ein Polyethersulfon aus 2,7-Bis(4-hydroxyphenoxy)naphthalin (0,0252 mol), 4,4′-Dihydroxydiphenylsulfon (0,0753 mol) und 4,4′-Dichlordiphenylsulfon (0,1000 mol) mit Kaliumcarbonat (0,1157 mol) hergestellt (Reaktionsbedingungen: 1 h/250 °C, 3 h/320 °C). Das resultierende Polymere (red. Visk. = 0,75 dl/g) besitzt eine Glasübergangstemperatur von 219 °C. Es ist zu mehr als 25 % in Methylenchlorid löslich.
Ein nach Beispiel II.5 hergestelltes Polyethersulfon wird in einer Plattenpresse bei 280 °C mit einer Kraft von 3000 N während 10 Minuten gepresst. Man erhält einen flexiblen transparenten Film von 0,32 mm Dicke, der eine Zugfestigkeit von 78 MPa und eine Bruchdehnung von 9,6 % aufweist (ermittelt nach DIN 53455 an Teststreifen von 1 cm Breite).

II.6 Polyethersulfon-Copolymeres aus 2,6-Bis-(4-hydroxyphenoxy)naphthalin, 4,4′-Dihydroxydiphenylsulfon und 4,4′-Dichlordiphenylsulfon

Analog zum im Beispiel II.1. beschriebenen Verfahren wird ein Polyethersulfon aus 2,6-Bis-(4-hydroxyphenoxy)naphthalin (0,0402 mol), 4,4′-Dihyroxydiphenylsulfon (0,3616 mol) und 4,4′-Dichlordiphenylsulfon (0,4000 mol) mit Kaliumcarbonat (0,4202 mol) hergestellt (Reaktionsbedingungen: 1h/253 °C, 4h/280 °C). Das resultierende Polymere (reduzierte Viskosität = 0,48 dl/g, Glasübergangstemperatur: 210 °C) ist zu mehr als 25 % in Methylenchlorid löslich.

II.7 Polyethersulfon-Copolymeres aus 2,6-Bis-(4-hydroxyphenoxy)naphthalin, 4,4′-Dihydroxydiphenylsulfon und 4,4′-Dichlordiphenylsulfon

Analog zum im Beispiel II.1. beschriebenen Verfahren wird ein Polyethersulfon aus 2,6-Bis-(4-hydroxyphenoxy)naphthalin (0,0369 mol), 4,4′-Dihyroxydiphenylsulfon (0,1110 mol) und 4,4′-Dichlordiphenylsulfon (0,1471 mol) mit Kaliumcarbonat (0,1620 mol) hergestellt.

| | |
|---|---|
| Reaktionsbedingungen: | 1h/254 °C, 1h/278 °C, 1h/290 °C, 105 min/284 °C |
| reduzierte Viskosität: | 0,57 dl/g |
| Glasübergangstemperatur: | 221 °C |
| Löslichkeit: | > 25 % in Methylenchlorid |

II.8 Polyethersulfon-Copolymeres aus 2,6-Bis-(4-hydroxyphenoxy)naphthalin, 4,4′-Dihydroxybiphenyl und 4,4′-Dichlordiphenylsulfon

Analog zum im Beispiel II.1. beschriebenen Verfahren wird ein Polyethersulfon aus 2,6-Bis-(4-hydroxyphenoxy)naphthalin (0,0253 mol), 4,4′-Dihyroxybiphenyl (0,0252 mol) und 4,4′-Dichlordiphenylsulfon (0,0500 mol) mit Kaliumcarbonat (0,0588 mol) hergestellt.

| | |
|---|---|
| Reaktionsbedingungen: | 1h/234 °C, 1h/258 °C, 70 min/274 °C |
| reduzierte Viskosität: | 0,83 dl/g |
| Glasübergangstemperatur: | 197 °C |
| Löslichkeit: | > 25 % in Methylenchlorid |

II.9 Polyethersulfon-Copolymeres aus 2,6-Bis-(4-hydroxyphenoxy)naphthalin, 4,4′-Dihydroxydiphenylsulfon, 4,4′-Dichlordiphenylsulfon und 4,4′-Difluorbenzophenon

Analog zum im Beispiel II.1. beschriebenen Verfahren wird ein Polyethersulfon aus 2,6-Bis-(4-hydroxyphenoxy)naphthalin (0,0252 mol), 4,4′-Dihyroxydiphenylsulfon (0,0735 mol), 4,4′-Dichlordiphenylsulfon (0,0750 mol) und 4,4′-Difluorbenzophenon (0,0250 mol) mit Kaliumcarbonat (0,1140 mol) hergestellt.

| | |
|---|---|
| Reaktionsbedingungen: | 1h/230 °C, 1h/253 °C, 3h/278 °C |
| reduzierte Viskosität: | 0,35 dl/g |
| Glasübergangstemperatur: | 197 °C |
| Löslichkeit: | > 25 % in Methylenchlorid |

II.10 Polyethersulfon-Copolymeres aus 2,6-Bis-(4-hydroxyphenoxy)naphthalin, 6,6′-Dihydroxy-3,3,3′,3′-tetramethyl-1,1′-spirobiindan, 2,6-Difluorbenzonitril und 4,4′-Dichlordiphenylsulfon

Analog zum im Beispiel II.1. beschriebenen Verfahren wird ein Polyethersulfon aus 2,6-Bis-(4-hydroxyphenoxy)naphthalin (0,0125 mol), 6,6-Dihydroxy-3,3,3′,3′-tetramethyl-1,1′-spirobiindan (0,0377 mol), 2,2-Difluorbenzonitril (0,0120 mol) und 4,4′-Dichlordiphenylsulfon (0,0401 mol) mit Kaliumcarbonat (0,0552 mol) hergestellt.

| | |
|---|---|
| Reaktionsbedingungen: | 1h/238 °C, 1h/254 °C, 4h/280 °C |
| reduzierte Viskosität: | 0,11 dl/g |
| Glasübergangstemperatur: | 151 °C |
| Löslichkeit: | > 25 % in Methylenchlorid |

II.11 Polyethersulfon-Copolymeres aus 2,6-Bis-(4-hydroxyphenoxy)naphthalin, 4,4′-Dihydroxydiphenylsulfon, 4,4′-Dichlordiphenylsulfon und 3,6-Dichlorpyridazin

Analog zum im Beispiel II.1. beschriebenen Verfahren wird ein Polyethersulfon aus 2,6-Bis-(4-hydroxyphenoxy)naphthalin (0,0125 mol), 4,4′-Dihyroxydiphenylsulfon (0,0379 mol), 3,6-Dichlorpyridazin (0,0102 mol) und 4,4′-Dichlordiphenylsulfon (0,0400 mol) mit Kaliumcarbonat (0,0555 mol) hergestellt.

| | |
|---|---|
| Reaktionsbedingungen: | 1h/229 °C, 1h/253 °C, 4h/283 °C, |
| reduzierte Viskosität: | 0,20 dl/g |
| Glasübergangstemperatur: | 196 °C |
| Löslichkeit: | 20 % in Methylenchlorid |

II.12 Polyethersulfon-Copolymeres aus 2,6-Bis-(4-hydroxyphenoxy)naphthalin, 4,4′-Dihydroxydiphenylsulfon, 2,6-Dichlorpyridin und 4,4′-Dichlordiphenylsulfon

Analog zum im Beispiel II.1. beschriebenen Verfahren wird ein Polyethersulfon aus 2,6-Bis-(4-hydroxyphenoxy)naphthalin (0,0125 mol), 4,4′-Dihyroxydiphenylsulfon (0,0376 mol), 4,4′-Dichlordiphenylsulfon (0,0400 mol) und 2,6-Dichlorpyridin (0,0101 mol) mit Kaliumcarbonat (0,0555 mol) hergestellt.

| | |
|---|---|
| Reaktionsbedingungen: | 1h/232 °C, 1h/252 °C, 3h/279 °C |
| reduzierte Viskosität: | 0,17 dl/g |
| Glasübergangstemperatur: | 201 °C |
| Löslichkeit: | > 25 % in Methylenchlorid/NMP-Gemisch (95:5) |

II.13 Polyurethan aus 2,6-Bis(4-hydroxyphenoxy)naphthalin und 4,4′-Diphenylmethandiisocyanat

8,62 g (0,0250 mol) 2,6-Bis(4-hydroxyphenoxy)naphthalin werden in 100 ml Chlorbenzol unter Stickstoff suspendiert. Nach der Zugabe von 6,27 g (0,0251 mol) 4,4′-Diphenylmethandiisocyanat wird die Mischung 6 h unter Rückfluss gekocht. Anschliessend werden 105 ml Dimethylsulfoxid hinzugefügt, und das Gemisch wird weitere 11 h unter Rückfluss gekocht. Nach Abkühlen auf Raumtemperatur wird das entstandene Polymere durch Eingiessen in Isopropanol gefällt und bei 100 °C im Vakuum getrocknet. Es weist eine reduzierte Viskosität von 0,12 dl/g und eine Glasübergangstemperatur von 208 °C auf.

II.14 Polyesteramid aus 2,6-Bis(4-hydroxyphenoxy)naphthalin, 3-Aminophenol und Isophthalsäuredichlorid

Die Herstellung des Polyestergemisches erfolgt durch umgekehrte Grenzflächen-Polykondensation. Dieses Verfahren ist beispielsweise in "Houben-Weyl/Methoden der Organischen Chemie", Bd. E 20 (Makromolekulare Stoffe), Stuttgart 1987, S. 1420, beschrieben.
In einem Rundkolben werden 4,06 g (0,0200 mol) Isophthalsäuredichlorid, 0,31 g (0,0014 mol) Benzyltriethylammoniumchlorid und 1,10 g (0,0101 mol) 3-Aminophenol in 250 ml 1,2-Dichlorethan gelöst. Dazu wird eine Lösung von 3,45 g (0,0100 mol) 2,6-Bis(4-hydroxyphenoxy)naphthalin in verdünnter Natronlauge (hergestellt aus 3,10 g Natriumhydroxid und 250 g dest. Wasser) unter starkem Rühren innerhalb einer Stunde bei einer Temperatur von - 10 °C zugetropft, wobei sich ein flockiger, beige gefärbter Niederschlag bildet. Nach vollständiger Zugabe wird die Mischung weitere 5 h gerührt. Das Polymere wird durch Eingiessen der Reaktionsmischung in Isopropanol gefällt und bis zu einer Temperatur von 240 °C im Vakuum getrocknet. Es besitzt eine reduzierte Viskosität von 0,14 dl/g (1 g Polymeres gelöst in 100 ml NMP) und eine Glasübergangstemperatur von 263 °C.

II.15 Polysulfonat aus 2,6-Bis(4-hydroxyphenoxy)naphthalin und 4,4′-Biphenyldisulfonsäuredichlorid

Analog zum Verfahren von Beispiel II.14 wird ein Polysulfonat aus 2,6-Bis(4-hydroxyphenoxy)naphthalin (0,0100 mol) und 4,4′-Biphenyldisulfonsäuredichlorid (0,0100 mol) mit Benzyltriethylammoniumchlorid (0,0013 mol) in 250 ml 1,2-Dichlorethan und 0,0768 mol Natriumhydroxid in 250 ml Wasser hergestellt. Das isolierte Polymere weist eine reduzierte Viskosität von 0,54 dl/g (1 g Polymeres gelöst in 100 ml NMP) und eine Glasübergangstemperatur von 192 °C auf.

II.16 Polysulfonat aus 2,6-Bis(4-hydroxyphenoxy)naphthalin und 1,3-Benzoldisulfonsäuredichlorid

Analog zum Verfahren von Beispiel II.14 wird ein Polysulfonat aus 2,6-Bis(4-hydroxyphenoxy)naphthalin (0,0100 mol) und 1,3-Benzoldisulfonsäuredichlorid (0,0101 mol) mit Benzyltriethylammoniumchlorid (0,0015 mol) in 250 ml 1,2-Dichlorethan und 0,1125 mol Natriumhydroxid in 250 ml Wasser hergestellt. Das isolierte Polymere weist eine reduzierte Viskosität von 0,26 dl/g (1 g Polymeres gelöst in 100 ml NMP) und eine Glasübergangstemperatur von 199 °C auf.

II.17 Polyethersulfon/Epoxidharz-Blend

Ein gemäss Beispiel II.7 hergestelltes Polyethersulfon-Copolymeres wird zu 30 Gewichtsteilen als Lösung in Methylenchlorid zu einer Mischung, bestehend aus 50 Gewichtsteilen Tetraglycidyldiaminodiphenylmethan und 50 Gewichtsteilen Triglycidyl-p-aminophenol, gegeben, und das Lösungsmittel wird im Vakuum entfernt. Nach Zugabe von 50 Gewichtsteilen p-Diaminodiphenylsulfon wird das Gemisch in einer Form 2 h bei 160 °C und 2 h bei 210 °C ausgehärtet. Aus einer so hergestellten Platte werden Prüfkörper geschnitten und die Biegefestigkeit und Randfaserdehnung nach ISO 178 bestimmt.

| | |
|---|---|
| Biegefestigkeit: | 173 $N/mm^2$ |
| Randfaserdehnung: | 7,0 % |

**Patentansprüche**

1. Im wesentlichen lineare Polymere mit einer reduzierten Viskosität von 0,1 bis 2,5 dl/g, gemessen an einer Lösung von 1 g Polymeren in 100 ml N-Methylpyrrolidon (NMP) bei 25°C, enthaltend mindestens einen die Löslichkeit des Polymeren in organischen Lösungsmitteln erhöhenden Anteil an Struktureinheiten der Formel Ia oder Ib

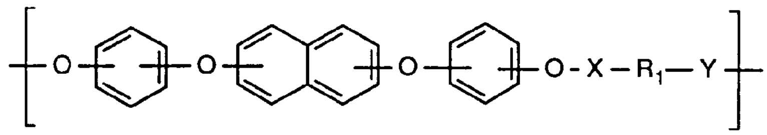 (Ia),

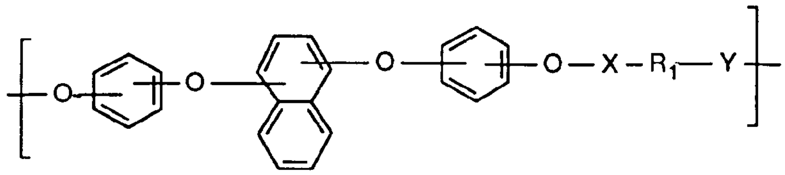 (Ib),

worin die aromatischen Ringe unsubstituiert oder durch ein oder mehrere $(C_1\text{-}C_4)$-Alkylgruppen, $(C_1\text{-}C_4)$-Alkoxygruppen, Phenylgruppen oder Halogenatome substituiert sind,
X für eine direkte Bindung, $-SO_2-$, -CO-, -CO-O-, -CO-NH- oder

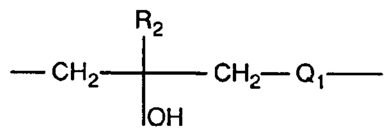

steht, worin $R_2$ ein H-Atom oder Methyl und $Q_1$ -O-, $-NR_2-$, -S- oder -OCO- bedeutet,
Y für eine direkte Bindung, $-SO_2-$, -CO-, -O-CO-, -NH-CO- oder

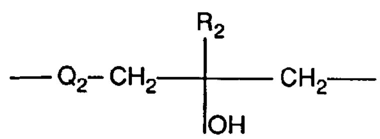

steht, worin $R_2$ ein H-Atom oder Methyl und $Q_2$ -O-, $-NR_2-$, -S- oder -COO- bedeutet,
$R_1$ einen zweiwertigen aliphatischen, cycloaliphatischen, aromatischen oder araliphatischen Rest mit bis zu 30 C-Atomen bedeutet, der unsubstituiert ist oder durch ein oder mehrere $(C_1\text{-}C_4)$-Alkyle, $(C_1\text{-}C_4)$-Alkylthio, $(C_2\text{-}C_6)$-Alkenyle, $(C_5\text{-}C_{12})$-Cycloalkyle, $(C_6\text{-}C_{12})$-Aryle oder eine oder mehrere Cyano- oder Nitrogruppen substituiert ist und in dem ein oder mehrere Kohlenstoffatome durch Sauerstoff-, Schwefel- und/oder Stickstoffatome ersetzt sein können,
oder $R_1$, falls X und/oder Y eine direkte Bindung ist, auch -CO- darstellt.

2. Polymere gemäss Anspruch 1, worin X für eine direkte Bindung, $-SO_2-$, -CO-O-, -CO-NH- oder

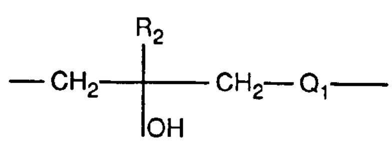

steht, worin $R_2$ ein H-Atom oder Methyl und $Q_1$ -O-, $-NR_2-$ oder -S- bedeutet,
Y für eine direkte Bindung, $-SO_2-$, -O-CO-, -NH-CO- oder

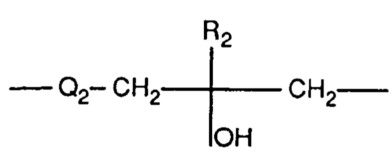

steht, worin $R_2$ ein H-Atom oder Methyl und $Q_2$ -O-, $-NR_2-$ oder -S- bedeutet.

3. Polymere gemäss Anspruch 1, worin $R_1$ in den Formeln Ia und Ib für einen aromatischen Rest steht.

4. Polymere gemäss Anspruch 3, worin die aromatischen Gruppen unsubstituiert sind.

5. Polymere gemäss Anspruch 1, enthaltend, bezogen auf die Gesamtmenge der im Polymer vorhandenen Struktureinheiten, 5 bis 100 mol-% einer wiederkehrenden Struktureinheit der Formel Ia oder Ib und 95 bis 0 mol-% einer wiederkehrenden Struktureinheit der Formel II

$$\left[ O-R_3-O-X-R_1-Y \right] \quad \text{(II)},$$

worin X, $R_1$ und Y die gleiche Bedeutung wie in Formel Ia oder Ib haben und $R_3$ einen zweiwertigen aliphatischen, cycloaliphatischen, araliphatischen oder aromatischen Rest mit bis zu 50 C-Atomen bedeutet, mit der Massgabe, dass der Rest der Formel II vom Rest der Formel Ia oder Ib verschieden ist.

6. Polymere gemäss Anspruch 5, worin $R_3$ in Formel II einen unsubstituierten oder durch ein oder mehrere $(C_1-C_4)$-Alkyle, $(C_1-C_4)$-Alkoxy, Phenyle oder Halogenatome substituierten Rest der Formeln IIIa bis IIIi bedeutet

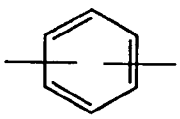 (IIIa), 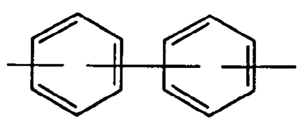 (IIIb), 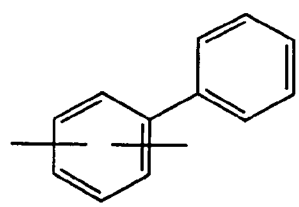 (IIIc),

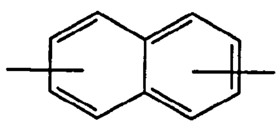 (IIId), 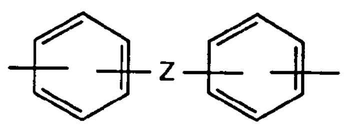 (IIIe),

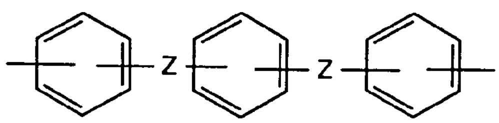 (IIIf),

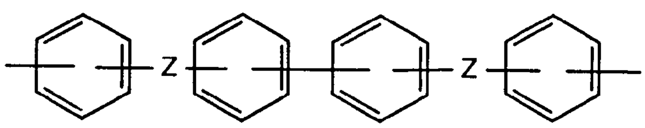 (IIIg),

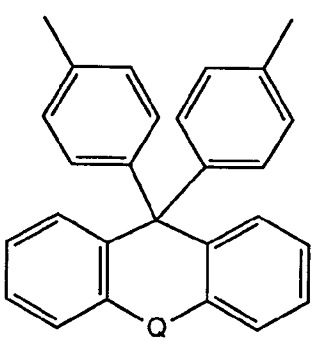 (IIIh), 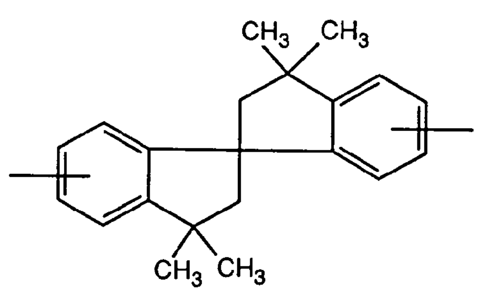 (IIIi),

wobei Z $-CH_2-$, $-C(CH_3)_2-$, $-C(CH_3)(C_6H_5)-$, $-C(CF_3)_2-$, -S-, -SO-, $-SO_2-$,

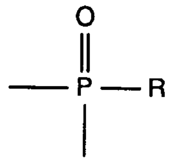

,

worin R Methyl oder Phenyl ist, -O-, oder -CO- bedeutet und Q für eine direkte Bindung, $-CH_2-$, -O- oder -CO- steht.

7. Polymere gemäss Anspruch 1 enthaltend, bezogen auf die Gesamtmenge der im Polyarylenetherharz vorhandenen Struktureinheiten, 5-100 mol-% einer wiederkehrenden Struktureinheit der Formel IVa oder IVb

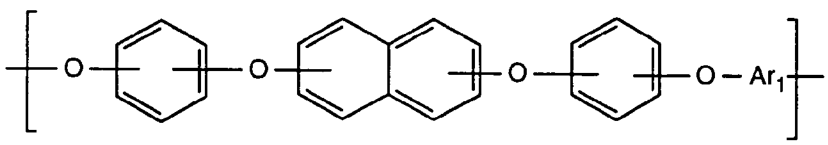

(IVa),

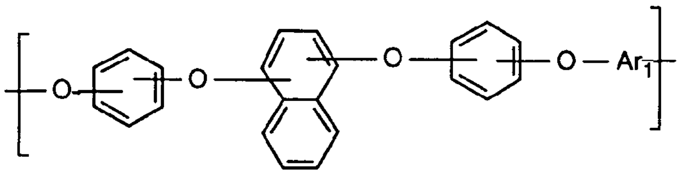

(IVb),

worin die aromatischen Ringe unsubstituiert oder durch eine oder mehrere $(C_1-C_4)$-Alkylgruppen, $(C_1-C_4)$-Alkoxygruppen, Phenylgruppen oder Halogenatome substituiert sind, und 95-0 mol-% einer wiederkehrenden Struktureinheit der Formel V

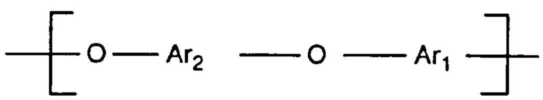

(V),

worin $Ar_1$ eine unsubstituierte oder durch eine oder mehrere $(C_1-C_4)$-Alkylgruppen, $(C_1-C_4)$-Alkoxygruppen, Phenylgruppen oder Halogenatome substituierte Gruppe der Formeln VIa bis VIe darstellt,

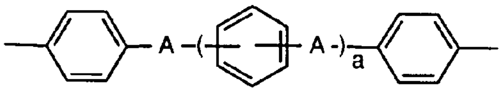

(VIa),

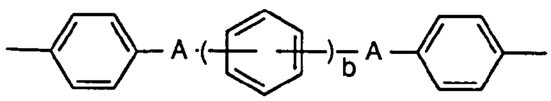

(VIb),

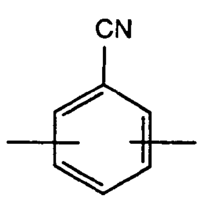

(VIc),

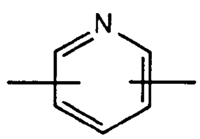

(VId),

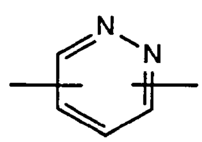

(VIe),

wobei A -CO-, $-SO_2-$, oder -SO- bedeutet, a die Zahl 0 oder 1 und b die Zahl 2 oder 3 bedeutet, $Ar_2$ eine unsubstituierte oder durch eine oder mehrere $(C_1-C_4)$-Alkylgruppen, $(C_1-C_4)$-Alkoxygruppen, Phenylgruppen oder Halogenatome substituierte Gruppe der Formeln IIIa bis IIIi darstellt,

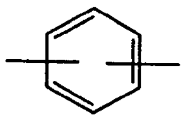 (IIIa), 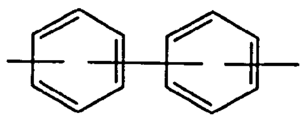 (IIIb), 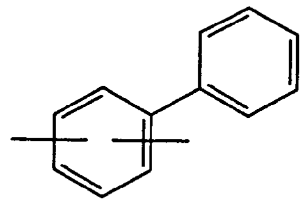 (IIIc),

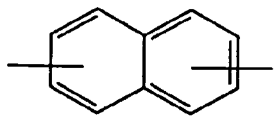 (IIId), 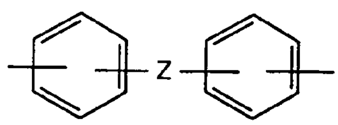 (IIIe),

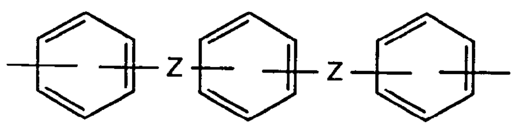 (IIIf),

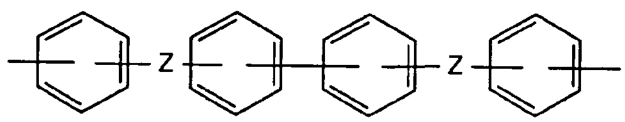 (IIIg),

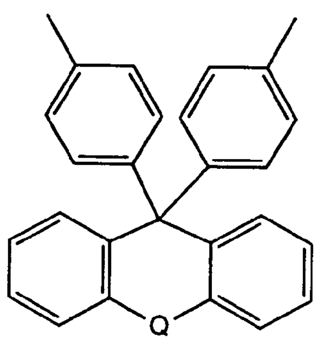 (IIIh), 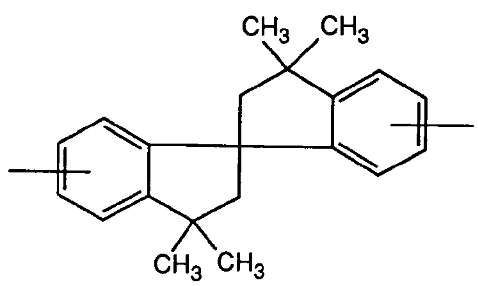 (IIIi),

wobei Z $-CH_2-$, $-C(CH_3)_2-$, $-C(CH_3)(C_6H_5)-$, $-C(CF_3)_2-$, -S-, -SO-, $-SO_2-$,

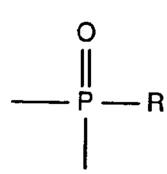 ,

worin R Methyl oder Phenyl ist, -O-, oder -CO- bedeutet und Q für eine direkte Bindung, $-CH_2-$, -O- oder -CO- steht.

8. Polymere gemäss Anspruch 7, enthaltend 10-10 mol-% einer wiederkehrenden Struktureinheit der Formel IVa oder IVb und 90-0 mol-% einer wiederkehrenden Struktureinheit der Formel V, worin $Ar_1$ einen Rest der Formel

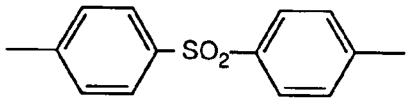 , 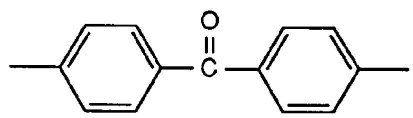 , 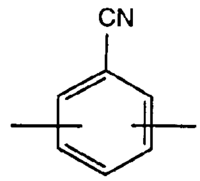 ,

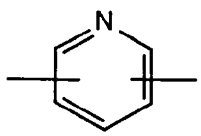 , oder 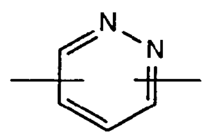

bedeutet und $Ar_2$ für einen Rest der Formeln

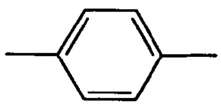 , 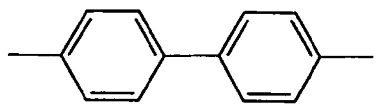 , 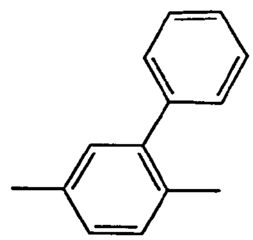 ,

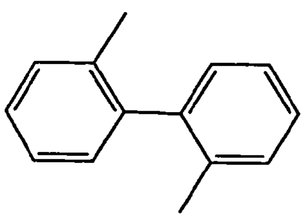 , 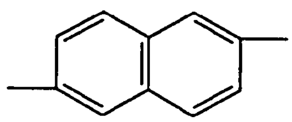 , 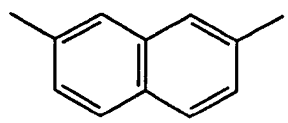 ,

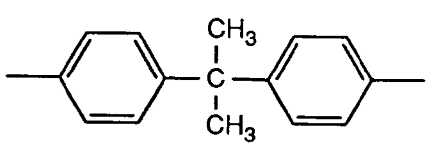 , 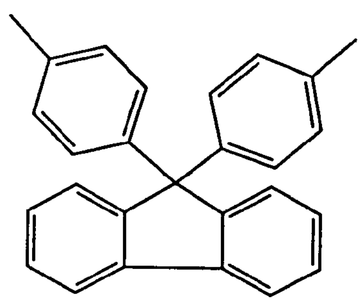 ,

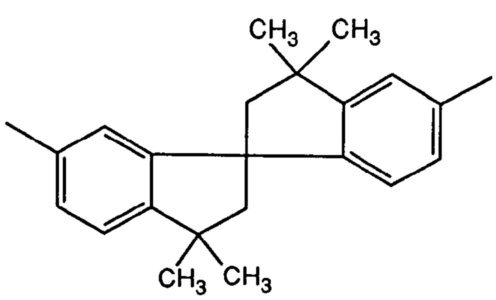 , 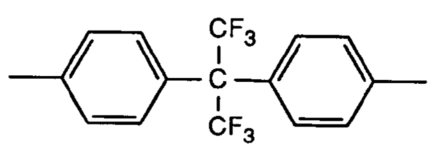 ,

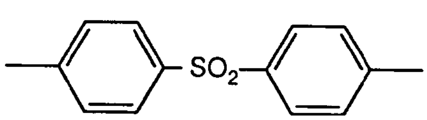 oder 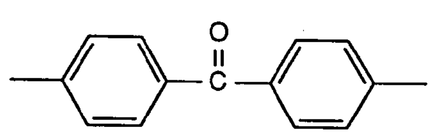 steht.

**9.** Polymere gemäss Anspruch 8, worin $Ar_1$ für einen Rest der Formel

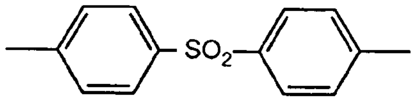 oder 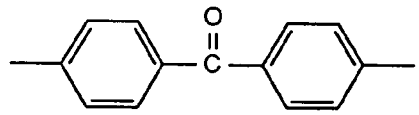

und $Ar_2$ für einen Rest der Formel

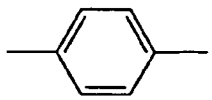, 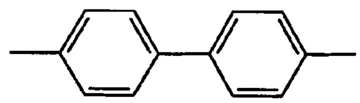,

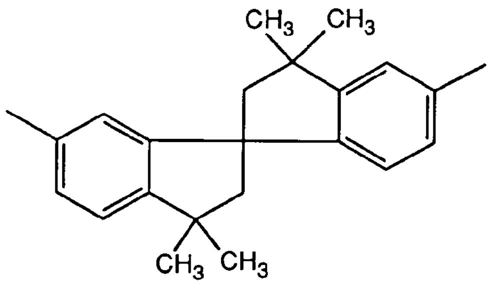, 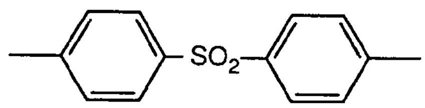 oder

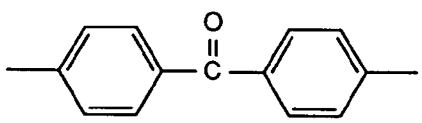 steht.

**10.** Polymere gemäss Anspruch 8, worin $Ar_1$ für

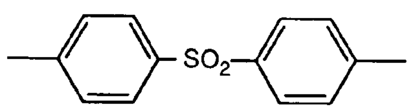

und $Ar_2$ für

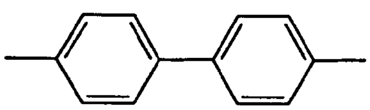 oder 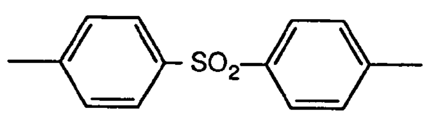 steht.

**11.** Lösung enthaltend 1 bis 75 Gew.-%, bezogen auf die Lösung eines Polymeren gemäss Anspruch 1, gelöst in einem organischen Lösungsmittel.

**12.** Verfahren zur Herstellung von Polymeren gemäss Anspruch 1, dadurch gekennzeichnet, dass man ein unsubstituiertes oder durch ein oder mehrere ($C_1$-$C_4$)-Alkylgruppen, ($C_1$-$C_4$)-Alkoxygruppen, Phenylgruppen oder Halogenatome substituiertes Bis-(hydroxyphenoxy)naphthalin der Formel VIIa oder VIIb

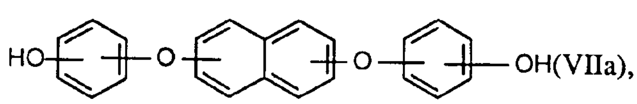 (VIIa),

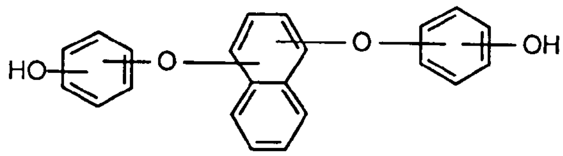

(VIIb),

oder ein Gemisch aus einem Bis-(hydroxyphenoxy)naphthalin der Formel VIIa oder VIIb und einer darin bis zu 95 mol-% enthaltenen, vom Bis-(hydroxyphenoxy)naphthalin der Formel VIIa oder VIIb verschiedenen Dihydroxyverbindung in äquimolaren Mengen mit einer Verbindung der Formel VIII

$$Z_1\text{-}R_1\text{-}Z_2 \qquad \text{(VIII)},$$

umsetzt, worin $R_1$ die gleiche Bedeutung wie in Formel I hat und $Z_1$ und $Z_2$ unabhängig voneinander je ein Halogenatom, vorzugsweise Fluor- oder Chloratom, oder einen Rest der Formeln $-SO_3H$, $-SO_3R_4$, $-SO_2Cl$, -COOH, -COCl, $-COOR_4$, $-OR_4$, -O-COCl, -N=C=O,

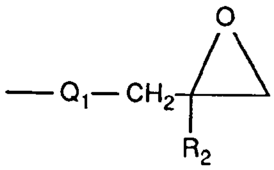 oder 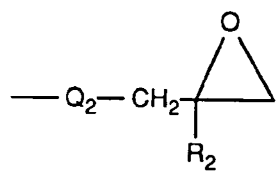

bedeuten, worin $R_4$ ($C_1$-$C_4$)-Alkyl oder Phenyl,
$R_2$ ein H-Atom oder Methyl und $Q_1$ und $Q_2$ -O-, $-NR_2-$, -S- oder -OCO- bedeutet.

**13.** Verbindungen der Formel XIa und XIb

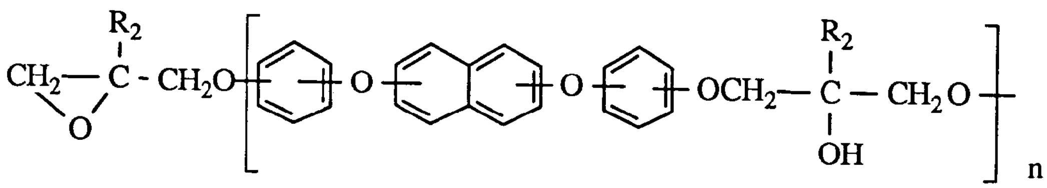

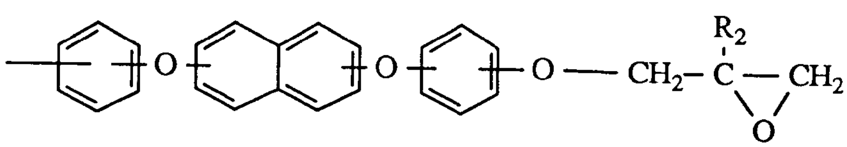

(XIa),

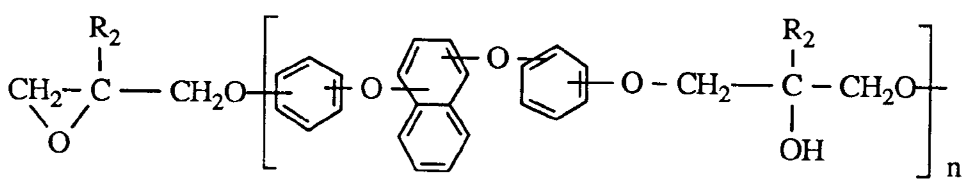

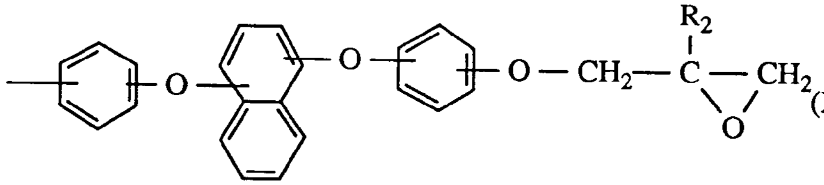

(XIb),

worin die aromatischen Ringe unsubstituiert oder durch eine oder mehrere ($C_1$-$C_4$)-Alkylgruppen, ($C_1$-$C_4$)-Alkoxygruppen, Phenylgruppen oder Halogenatome substituiert sind, $R_2$ für ein H-Atom oder Methyl steht und n Null oder eine Zahl von 1 bis 20 ist.

**14.** Unsubstituierte oder durch ein oder mehrere ($C_1$-$C_4$)-Alkylgruppen, ($C_1$-$C_4$)-Alkoxygruppen, Phenylgruppen oder Halogenatome substituierte Verbindungen der Formel XIIa oder XIIb

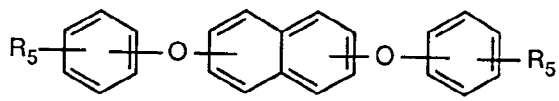 (XIIa),

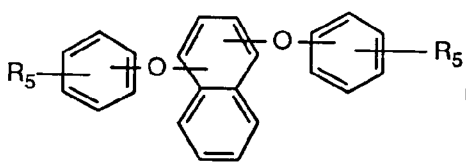 (XIIb),

worin $R_5$ für ($C_2$-$C_5$)-Acyl oder ($C_2$-$C_5$)-Acyloxy steht.

**15.** Verbindungen gemäss Anspruch 14, worin die aromatischen Ringe unsubstituiert sind.

**16.** Verbindungen gemäss Anspruch 14, worin sich die Reste $R_5$ in para-Stellung zum Ethersauerstoff befinden.

**17.** Verfahren zur Herstellung von Verbindungen der Formeln XIIa oder XIIb, dadurch gekennzeichnet, dass man

a) ein unsubstituiertes oder durch ein oder mehrere ($C_1$-$C_4$)-Alkylgruppen, ($C_1$-$C_4$)-Alkoxygruppen, Phenylgruppen oder Halogenatome substituiertes Dihydroxynaphthalin der Formel XIIIa oder XIIIb,

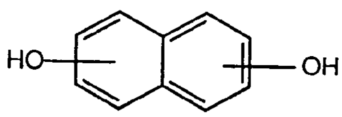 (XIIIa),

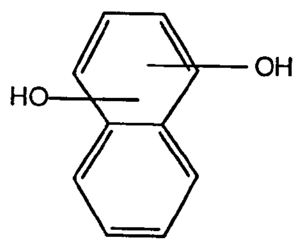 (XIIIb),

mit einem unsubstituierten oder durch ein oder mehrere ($C_1$-$C_4$)-Alkylgruppen, ($C_1$-$C_4$)-Alkoxygruppen, Phenylgruppen oder Halogenatomen substituierten Halogenbenzol der Formel XIV,

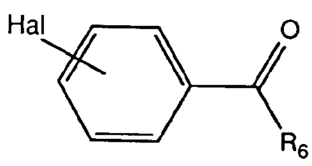 (XIV),

worin Hal für Halogen, insbesondere Fluor oder Chlor, steht und $R_6$ ($C_1$-$C_4$)-Alkyl bedeutet, in Gegenwart von Alkali zu einem Bis-(acylphenoxy)naphthalin der Formel XIIa oder XIIb mit $R_5$= ($C_2$-$C_5$)-Acyl umsetzt,

b) gegebenenfalls das Bis-(acylphenoxy)naphthalin mit einer Persäure zu einem Bis-(acyloxphenoxy)naphthalin der Formel XIIa oder XIIb mit $R_5$= ($C_2$-$C_5$)-Acyloxy oxidiert und

c) gegebenenfalls das Bis-(acyloxyphenoxy)-naphthalin alkalisch hydrolysiert.

**18.** Formstoffe, Beschichtungen oder Folien enthaltend ein Polymer gemäss Anspruch 1.

**19.** Verwendung der Polymeren gemäss Anspruch 1 zum Modifizieren von thermoplastischen und duromeren Matrixharzen.

**20.** Verwendung der Polymeren gemäss Anspruch 7 zum Modifizieren von heisshärtbaren Epoxidharzen.

**Patentansprüche für folgenden Vertragsstaat: ES.**

**1.** Verfahren zur Herstellung von im wesentlichen linearen Polymeren mit einer reduzierten Viskosität von 0,1 bis 2,5 dl/g, gemessen an einer Lösung von 1 g Polymeren in 100 ml N-Methylpyrrolidon (NMP) bei 25°C, enthaltend mindestens einen die Löslichkeit des Polymeren in organischen Lösungsmitteln erhöhenden Anteil an Struktureinheiten der Formel Ia oder Ib

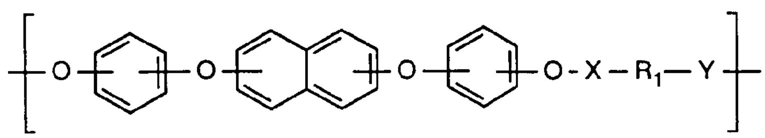 (Ia),

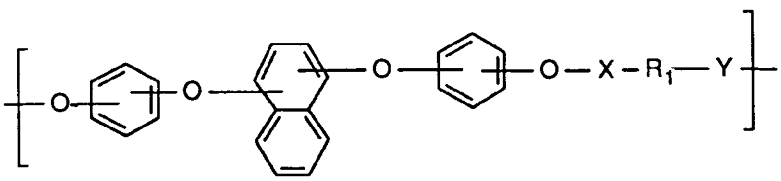 (Ib),

worin die aromatischen Ringe unsubstituiert oder durch ein oder mehrere $(C_1$-$C_4)$-Alkylgruppen, $(C_1$-$C_4)$-Alkoxygruppen, Phenylgruppen oder Halogenatome substituiert sind,
X für eine direkte Bindung, $-SO_2-$, -CO-, -CO-O-, -CO-NH- oder

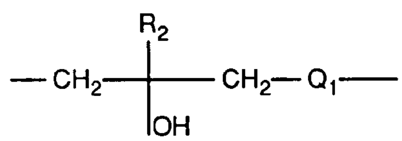

steht, worin $R_2$ ein H-Atom oder Methyl und $Q_1$ -O-, $-NR_2-$, -S- oder -OCO- bedeutet,
Y für eine direkte Bindung, $-SO_2-$, -CO-, -O-CO-, -NH-CO- oder

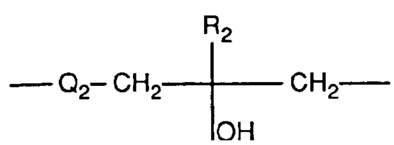

steht, worin $R_2$ ein H-Atom oder Methyl und $Q_2$ -O-, $-NR_2-$, -S- oder -COO- bedeutet,
$R_1$ einen zweiwertigen aliphatischen, cycloaliphatischen, aromatischen oder araliphatischen Rest mit bis zu 30 C-Atomen bedeutet, der unsubstituiert ist oder durch ein oder mehrere $(C_1$-$C_4)$-Alkyle, $(C_1$-$C_4)$-Alkylthio, $(C_2$-$C_6)$-Alkenyle, $(C_5$-$C_{12})$-Cycloalkyle, $(C_6$-$C_{12})$-Aryle oder eine oder mehrere Cyano- oder Nitrogruppen substituiert ist und in dem ein oder mehrere Kohlenstoffatome durch Sauerstoff-, Schwefel- und/oder Stickstoffatome ersetzt sein können,
oder $R_1$, falls X und/oder Y eine direkte Bindung ist, auch -CO- darstellt, dadurch gekennzeichnet, dass man ein unsubstituiertes oder durch ein oder mehrere $(C_1$-$C_4)$-Alkylgruppen, $(C_1$-$C_4)$-Alkoxygruppen, Phenylgruppen oder Halogenatomesubstituiertes Bis-(hydroxyphenoxy)naphthalin der Formel VIIa oder VIIb

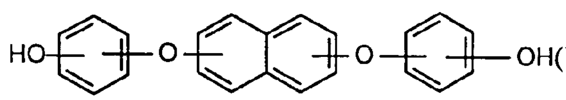(VIIa),

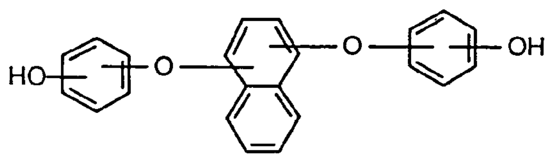 (VIIb),

oder ein Gemisch aus einem Bis-(hydroxyphenoxy)naphthalin der Formel VIIa oder VIIb und einer darin bis zu 95 mol-% enthaltenen, vom Bis-(hydroxyphenoxy)naphthalin der Formel VIIa oder VIIb verschiedenen Dihydroxyverbindung in äquimolaren Mengen mit einer Verbindung der Formel VIII

$Z_1$-$R_1$-$Z_2$ (VIII),

umsetzt, worin $R_1$ die gleiche Bedeutung wie in Formel I hat und $Z_1$ und $Z_2$ unabhängig voneinander je ein Halogenatom, vorzugsweise Fluor- oder Chloratom, oder einen Rest der Formeln $-SO_3H$, $-SO_3R_4$, $-SO_2Cl$, -COOH, -COCl, $-COOR_4$, $-OR_4$, -O-COCl, -N=C=O,

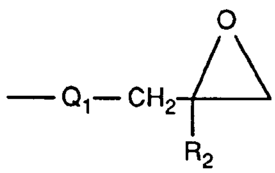 oder 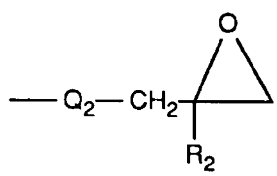

bedeuten, worin $R_4$ ($C_1$-$C_4$)-Alkyl oder Phenyl,
$R_2$ ein H-Atom oder Methyl und $Q_1$ und $Q_2$ -O-, $-NR_2$-, -S- oder -OCO- bedeutet.

2. Verfahren zur Herstellung von Polymeren gemäss Anspruch 1, worin X für eine direkte Bindung, $-SO_2$-, -CO-O-, -CO-NH- oder

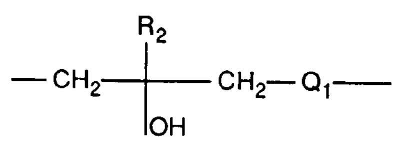

steht, worin $R_2$ ein H-Atom oder Methyl und $Q_1$ -O-, $-NR_2$- oder -S- bedeutet,
Y für eine direkte Bindung, $-SO_2$-, -O-CO-, -NH-CO- oder

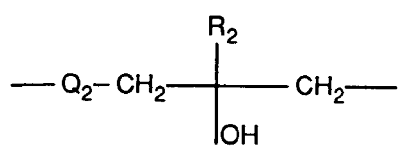

steht, worin $R_2$ ein H-Atom oder Methyl und $Q_2$ -O-, $-NR_2$- oder -S- bedeutet.

3. Verfahren zur Herstellung von Polymeren gemäss Anspruch 1, worin $R_1$ in den Formeln Ia und Ib für einen aromatischen Rest steht.

4. Verfahren zur Herstellung von Polymeren gemäss Anspruch 3, worin die aromatischen Gruppen unsubstituiert sind.

5. Verfahren zur Herstellung von Polymeren gemäss Anspruch 1, enthaltend, bezogen auf die Gesamtmenge der im Polymer vorhandenen Struktureinheiten, 5 bis 100 mol-% einer wiederkehrenden Struktureinheit der Formel Ia oder Ib und 95 bis 0 mol-% einer wiederkehrenden Struktureinheit der Formel II

$$\left[ O-R_3-O-X-R_1-Y \right] \quad (II),$$

worin X, $R_1$ und Y die gleiche Bedeutung wie in Formel Ia oder Ib haben und $R_3$ einen zweiwertigen aliphatischen, cycloaliphatischen, araliphatischen oder aromatischen Rest mit bis zu 50 C-Atomen bedeutet, mit der Massgabe, dass der Rest der Formel II vom Rest der Formel Ia oder Ib verschieden ist.

**6.** Verfahren zur Herstellung von Polymeren gemäss Anspruch 5, worin $R_3$ in Formel II einen unsubstituierten oder durch ein oder mehrere ($C_1$-$C_4$)-Alkyle, ($C_1$-$C_4$)-Alkoxy, Phenyle oder Halogenatome substituierten Rest der Formeln IIIa bis IIIi bedeutet

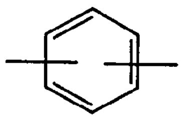 (IIIa), 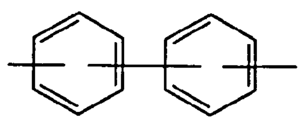 (IIIb), 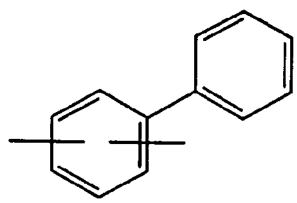 (IIIc),

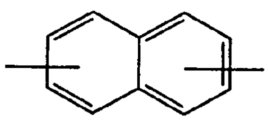 (IIId), 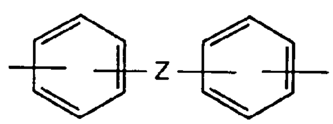 (IIIe),

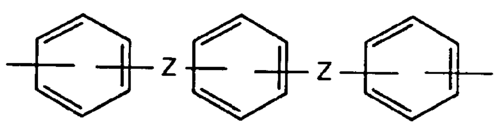 (IIIf),

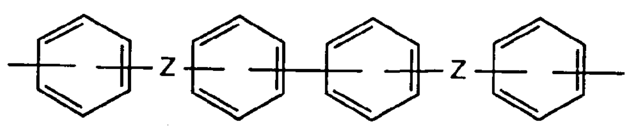 (IIIg),

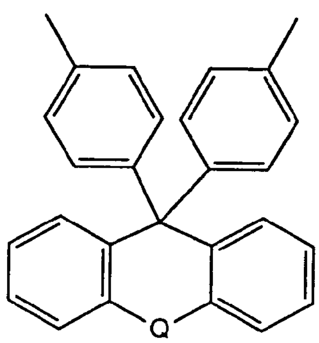 (IIIh), 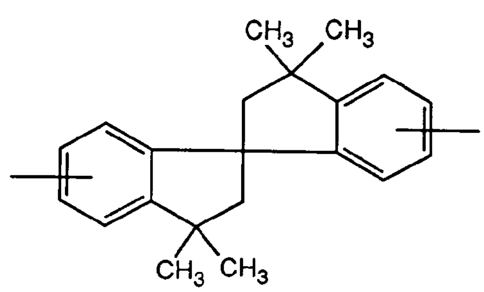 (IIIi),

wobei Z $-CH_2-$, $-C(CH_3)_2-$, $-C(CH_3)(C_6H_5)-$, $-C(CF_3)_2-$, -S-, -SO-, $-SO_2-$,

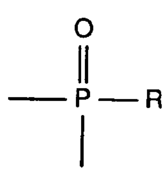 ,

worin R Methyl oder Phenyl ist, -O-, oder -CO- bedeutet und Q für eine direkte Bindung, $-CH_2-$, -O- oder -CO- steht.

7. Verfahren zur Herstellung von Polymeren gemäss Anspruch 1 enthaltend, bezogen auf die Gesamtmenge der im Polyarylenetherharz vorhandenen Struktureinheiten, 5-100 mol-% einer wiederkehrenden Struktureinheit der Formel IVa oder IVb

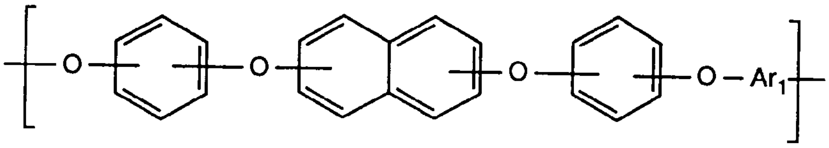 (IVa ),

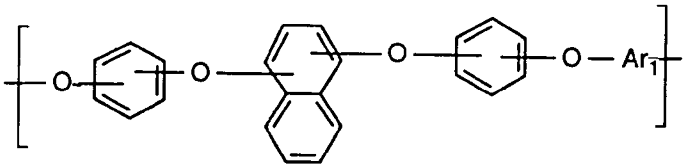 (IVb),

worin die aromatischen Ringe unsubstituiert oder durch eine oder mehrere ($C_1$-$C_4$)-Alkylgruppen, ($C_1$-$C_4$)-Alkoxygruppen, Phenylgruppen oder Halogenatome substituiert sind, und 95-0 mol-% einer wiederkehrenden Struktureinheit der Formel V

$$-\!\left[O-Ar_2-O-Ar_1\right]\!- \quad (V),$$

worin $Ar_1$ eine unsubstituierte oder durch eine oder mehrere ($C_1$-$C_4$)-Alkylgruppen, ($C_1$-$C_4$)-Alkoxygruppen, Phenylgruppen oder Halogenatome substituierte Gruppe der Formeln VIa bis VIe darstellt,

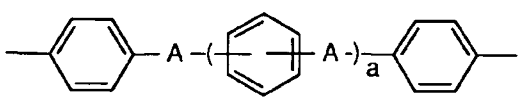 (VIa),

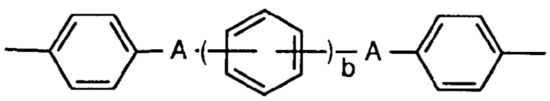 (VIb),

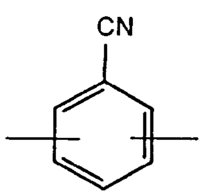 (VIc), 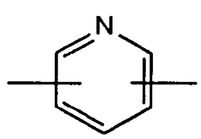 (VId), 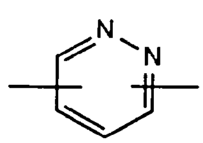 (VIe),

wobei A -CO-, -$SO_2$-, oder -SO- bedeutet, a die Zahl 0 oder 1 und b die Zahl 2 oder 3 bedeutet,
$Ar_2$ eine unsubstituierte oder durch eine oder mehrere ($C_1$-$C_4$)-Alkylgruppen, ($C_1$-$C_4$)-Alkoxygruppen, Phenylgruppen oder Halogenatome substituierte Gruppe der Formeln IIIa bis IIIi darstellt,

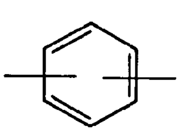 (IIIa), 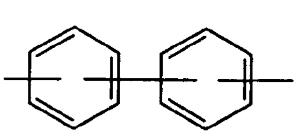 (IIIb), 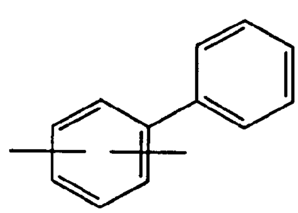 (IIIc),

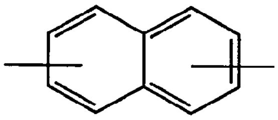 (IIId), 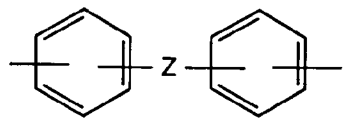 (IIIe),

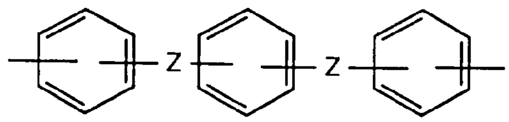 (IIIf),

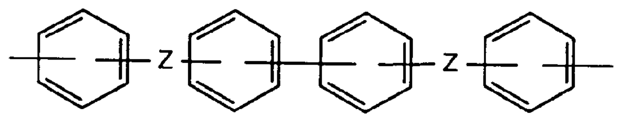 (IIIg),

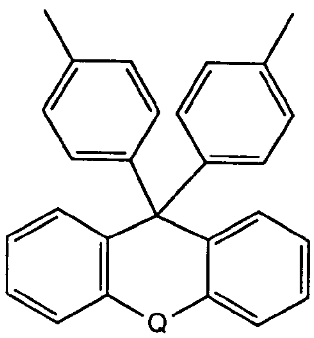 (IIIh), 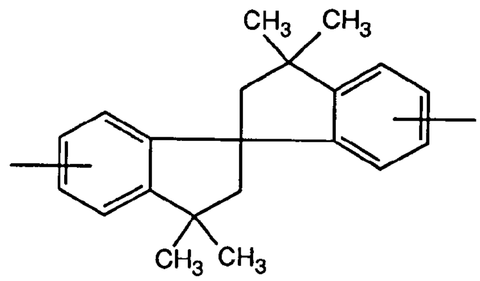 (IIIi),

wobei Z $-CH_2-$, $-C(CH_3)_2-$, $-C(CH_3)(C_6H_5)-$, $-C(CF_3)_2-$, -S-, -SO-, $-SO_2-$,

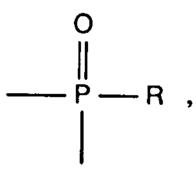 ,

worin R Methyl oder Phenyl ist, -O-, oder -CO- bedeutet und Q für eine direkte Bindung, $-CH_2-$, -O- oder -CO- steht,
dadurch gekennzeichnet, dass man ein Bis-(hydroxyphenoxy)naphthalin der Formel VIIa oder VIIb oder ein Gemisch aus einem Bis-(hydroxyphenoxy)naphthalin der Formel VIIa oder VIIb oder deren Alkali- oder Erdalkalisalze und einer darin bis zu 95 mol-% enthaltenen Dihydroxyverbindung der Formel IX

$HO-Ar_2-OH$ (IX)

oder deren Alkali- oder Erdalkalisalze, worin $Ar_2$ die gleiche Bedeutung wie in Formel V hat, mit einer äquimolaren Menge einer Dihalogenverbindung der Formel X

$Hal-Ar_1-Hal$ (X),

worin $Ar_1$ die in Formel IVa oder IVb angegebene Bedeutung hat und Hal für Halogen, insbesondere Fluor oder Chlor steht, in Gegenwart von Alkali in einem aprotischen Lösungsmittel polykondensiert, bis der erhaltene Polyarylenether eine reduzierte Viskosität von 0,1 bis 2,5 dl/g, vorzugsweise von 0,15 bis 1,8 dl/g insbesondere von 0,2 bis 1,5 dl/g, aufweist, gemessen an einer Lösung von 1 g Polymeren in 100 ml N-Methylpyrrolidon (NMP) bei 25 °C.

8. Verfahren zur Herstellung von Polymeren gemäss Anspruch 7, enthaltend 10-100 mol-% einer wiederkehrenden Struktureinheit der Formel IVa oder IVb und 90-0 mol-% einer wiederkehrenden Struktureinheit der Formel V, worin $Ar_1$ einen Rest der Formel

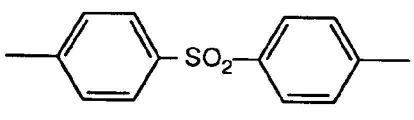 , 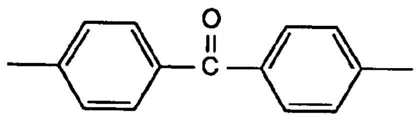 ,

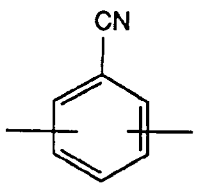 , 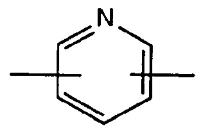 , oder 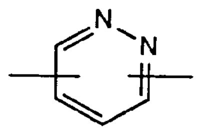

bedeutet und $Ar_2$ für einen Rest der Formeln

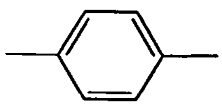 , 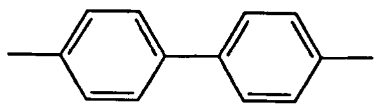 , 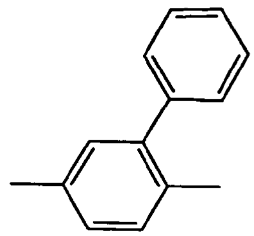 ,

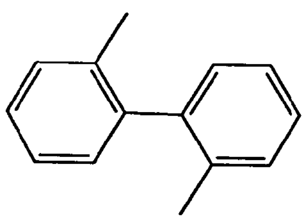 , 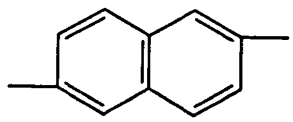 , 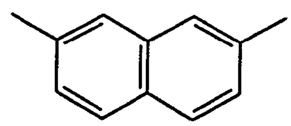 ,

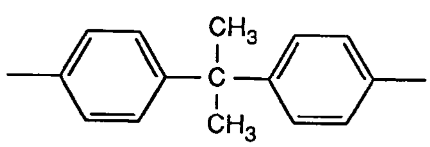 , 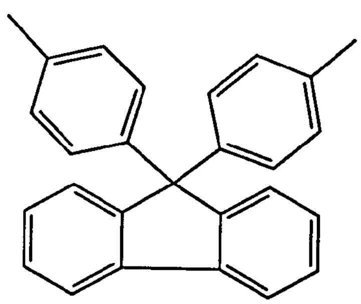 ,

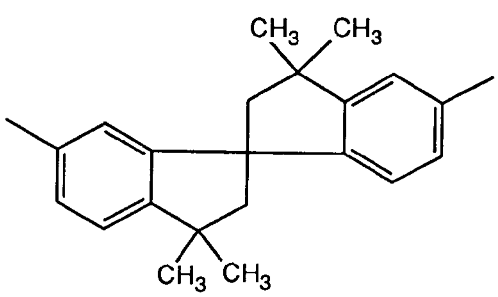 , 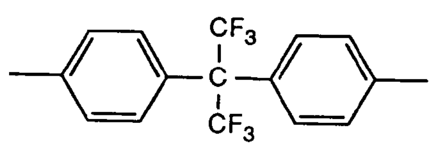 ,

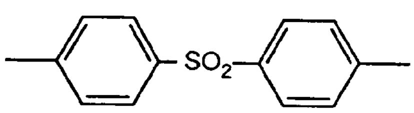 oder 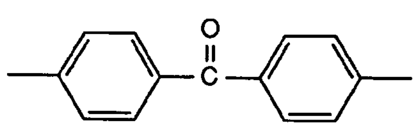 steht.

9. Verfahren zur Herstellung von Polymeren gemäss Anspruch 8, worin $Ar_1$ für einen Rest der Formel

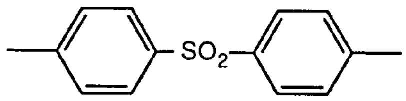 oder 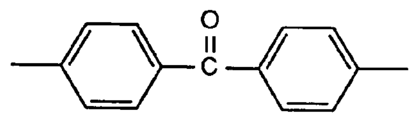

und $Ar_2$ für einen Rest der Formel

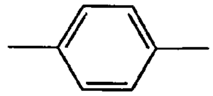 , 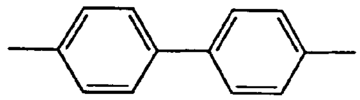 ,

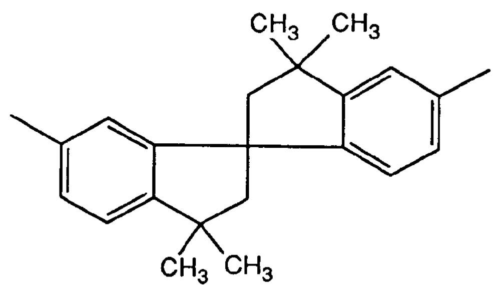 , 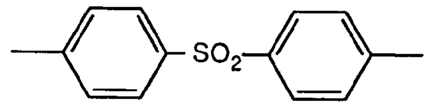 oder

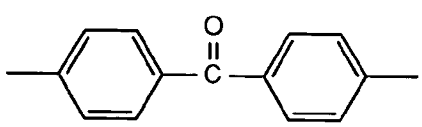 steht.

**10.** Verfahren zur Herstellung von Polymeren gemäss Anspruch 8, worin $Ar_1$ für

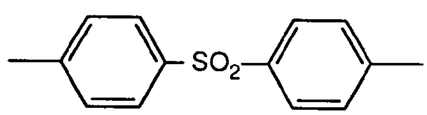 und $Ar_2$ für 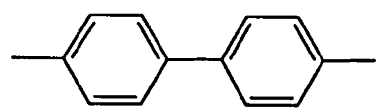 oder

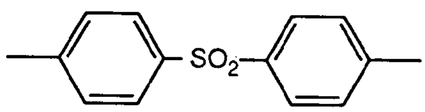 steht.

**11.** Lösung enthaltend 1 bis 75 Gew.-%, bezogen auf die Lösung eines Polymeren gemäss Anspruch 1, gelöst in einem organischen Lösungsmittel.

**12.** Verfahren zur Herstellung von unsubstituierten oder durch ein oder mehrere ($C_1$-$C_4$)-Alkylgruppen, ($C_1$-$C_4$)-Alkoxygruppen, Phenylgruppen oder Halogenatome substituierte Verbindungen der Formel XIIa oder XIIb

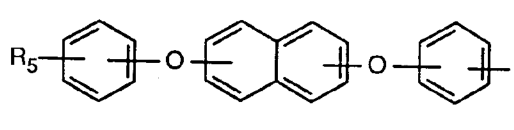 (XIIa),

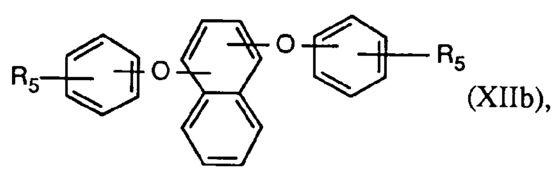 (XIIb),

worin $R_5$ für ($C_2$-$C_5$)-Acyl oder ($C_2$-$C_5$)-Acyloxy steht, dadurch gekennzeichnet, dass man

a) ein unsubstituiertes oder durch ein oder mehrere ($C_1$-$C_4$)-Alkylgruppen, ($C_1$-$C_4$)-Alkoxygruppen, Phenylgruppen oder Halogenatome substituiertes Dihydroxynaphthalin der Formel XIIIa oder XIIIb,

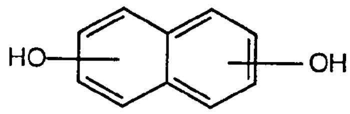

(XIIIa),

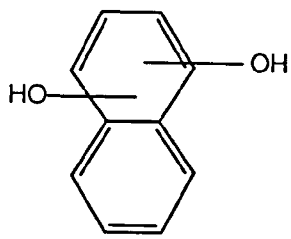

(XIIIb),

mit einem unsubstituierten oder durch ein oder mehrere ($C_1$-$C_4$)-Alkylgruppen, ($C_1$-$C_4$)-Alkoxygruppen, Phenylgruppen oder Halogenatomen substituierten Halogenbenzol der Formel XIV,

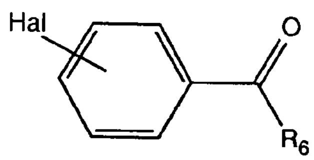

(XIV),

worin Hal für Halogen, insbesondere Fluor oder Chlor, steht und $R_6$ ($C_1$-$C_4$)-Alkyl bedeutet, in Gegenwart von Alkali zu einem Bis-(acylphenoxy)naphthalin der Formel XIIa oder XIIb mit $R_5$= ($C_2$-$C_5$)-Acyl umsetzt und

b) gegebenenfalls das Bis-(acylphenoxy)naphthalin mit einer Persäure zu einem Bis-(acyloxyphenoxy)naphthalin der Formel XIIa oder XIIb mit $R_5$= ($C_2$-$C_5$)-Acyloxy oxidiert.

**13.** Formstoffe, Beschichtungen oder Folien enthaltend ein Polymer hergestellt gemäss Anspruch 1.

**14.** Verwendung der gemäss Anspruch 1 hergestellten Polymeren zum Modifizieren von thermoplastischen und duromeren Matrixharzen.

**15.** Verwendung der gemäss Anspruch 7 hergestellten Polymeren zum Modifizieren von heisshärtbaren Epoxidharzen.